# FASCICULE DE BREVET EUROPEEN

(11) **EP 3 846 416 B1**
(45) Date de publication et mention de la délivrance du brevet: **24.05.2023**
(21) Numéro de dépôt: 20217903.2
(22) Date de dépôt: 30.12.2020
(51) Int. Cl.: H04L 65/40, H04L 67/12, H04W 4/70, H04L 69/28

(54) **PROCÉDÉ DE PARTAGE ORDONNANCÉ DE FONCTIONNALITÉS DES IOTS ET DISPOSITIF DE PARTAGE ORDONNANCÉ**
VERFAHREN ZUR TERMINIERTEN GETEILTEN NUTZUNG VON IOT-FUNKTIONEN, UND VORRICHTUNG ZUR TERMINIERTEN GETEILTEN NUTZUNG
METHOD FOR SCHEDULED SHARING OF IOT FUNCTIONALITIES AND DEVICE FOR SCHEDULED SHARING

(30) Priorité: 31.12.2019 FR 1915806
(43) Date de publication de la demande: 07.07.2021
(73) Titulaire: BULL SAS, 78340 Les Clayes-sous-Bois (FR)
(72) Inventeur: DEMEILLIEZ, Bruno, 38380 Saint Laurent du Pont (FR); MENIGOT, Gilles, 38190 Froges (FR); CHAABANE, Wajih, 73000 Chambery (FR)
(74) Mandataire: IPAZ

(56) Documents cités:
- JP-A- 2017 219 930
- US-A1- 2016 119 434

## Description

L'invention s'intéresse au domaine objets connectés (loTs ou « Internet of Things » en terminologie anglo-saxonne), et plus particulièrement aux fonctionnalités des loTs. L'invention concerne un procédé de partage ordonnancé de fonctionnalités des loTs dans une infrastructure d'objets connectés. L'invention concerne en outre un dispositif de partage pour le partage ordonnancé de fonctionnalités des loTs dans une infrastructure d'objets connectés.

### [Art antérieur]

Historiquement, les entités adressables sur le réseau Internet étaient uniquement des éléments d'information numériques, à savoir des pages HTML ou d'autres fichiers accessibles en ligne, et identifiables par des adresses URL de sites web, par exemple. Considéré comme la troisième révolution de l'internet, l'internet des objets ou IdO (en anglais « Internet Of Things », ou loT) peut être regardé comme l'extension d'Internet à des éléments physiques.

L'internet des objets désigne l'ensemble des objets connectés à internet et correspond au domaine des Nouvelles Technologies de l'information et de la Communication qui est en pleine expansion. Les dispositifs électroniques concernés par ces applications sont appelés des objets connectés, en ce sens qu'ils interagissent au travers de sous-réseaux locaux pouvant être connectés à un réseau central comme l'Internet.

Ainsi, une définition de l'internet des objets est proposée dans l'ouvrage intitulé « L'internet des objets », de Pierre-Jean Benghozi, Sylvain Bureau, et Françoise Massit-Folléa publié aux Éditions de la Maison des sciences de l'homme, Chapitre 1, pp. 15-23, comme étant « un réseau de réseaux qui permet, via des systèmes d'identification électronique normalisés et unifiés, et des dispositifs mobiles sans fil, d'identifier directement et sans ambiguïté des entités numériques et des objets physiques et ainsi de pouvoir récupérer, stocker, transférer et traiter, sans discontinuité entre les mondes physiques et virtuels, les données s'y rattachant. »

Plusieurs sous-réseaux locaux peuvent être intégrés à un même réseau d'objets connectés. Un tel réseau d'objets connectés, aussi appelé réseau local dans la suite, comprend alors plusieurs passerelles de connexion, propres à chaque sous-réseau, auxquelles sont respectivement connectés un ou plusieurs objets connectés. Chaque passerelle de connexion assure le routage de messages qui transitent, d'une part, entre les différents objets connectés du réseau local et, d'autre part, entre les objets connectés du réseau local et un réseau de transport de données (comme par exemple Internet).

Les usages des objets connectés sont très variés et peuvent aller du domaine de l'e-santé à celui de la domotique en passant par les téléphones mobiles, le concept d'environnement intelligent et notamment de ville intelligente (ou « Smart City », en anglais), la surveillance (en anglais : « monitoring ») d'installations industrielles, les transports et la logistique, les voitures autonomes, l'agriculture, domotique etc. Les objets connectés envahissent un peu plus chaque jour notre quotidien. On comptait 4,9 milliards d'objets en 2015. On parle de 25 à 150 milliards d'objets connectés en 2025. A cette croissance exponentielle, s'ajoute une très grande diversité des domaines d'applications : santé, transport, commerce, domotique...

Le nombre et la diversité constituent un vrai défi technique pour l'accès aux ressources de l'ensemble de ces objets. En particulier, l'augmentation du nombre d'objets connectés à Internet entraine une augmentation de la consommation en énergie et un besoin en ressource accru. Par ailleurs, chaque loT offre ses propres fonctionnalités et présente ses propres ressources. Ainsi pour bénéficier d'une pluralité de fonctionnalités, il est nécessaire de posséder une pluralité d'loTs. Ce qui augmente également de façon croissante le nombre d'loTs et donc une augmentation de la consommation en énergie et le besoin en ressource. En outre, la fabrication d'IoT présentant une pluralité de ressources utiles à une seule fonctionnalité augmente d'une part les coûts de fabrication et la consommation en ressource mais également les moyens de traitements dédiés et nécessaires à la réalisation de la fonction.

Une conséquence directe est la démultiplication du nombre d'loTs nécessaires au sein des réseaux domestiques ou d'entreprises ou réseaux locaux pour assurer une couverture complète ou du moins aussi large que possible d'une pluralité de fonctionnalités accessibles aux dits réseaux en fonction des choix des utilisateurs.

De plus, outre le fait que chaque sous-réseau peut s'appuyer sur une technologie qui lui est propre pour sa connectivité à l'Internet (par exemple avec une Box ADSL, une BOX 4G, une connexion WiMax, une connexion Satellite, un téléphone portable... ), chaque passerelle de connexion utilise potentiellement une ou plusieurs interfaces de communication différentes. Typiquement, les passerelles de connexion d'un réseau d'objets connectés peuvent utiliser des interfaces Ethernet, des interfaces WIFI, des interfaces Bluetooth, des interfaces RF433 ou encore des interfaces IrDA. Ainsi, l'interconnexion entre différentes passerelles de connexion suppose que chaque passerelle de connexion soit capable d'assurer ses fonctions de routage quelles que soient les différentes interfaces de communication utilisées par les différentes passerelles de connexion concernées.

Dans un contexte de développement du « edge computing » (terminologie anglo-saxonne) ou l'informatique en périphérie de réseau, il devient important de favoriser des solutions permettant des communications de machine à machine, mais également des coopérations de machine à machine où de plus en plus d'appareils seront interconnectés et au cours desquelles les données ou les problématiques seront traitées au niveau des loTs.

Il a été proposé des procédés et dispositifs de partage de fonctions entre loTs (EP3026871). Il a aussi été proposé des procédés et dispositifs pour réduire les coûts nécessaires pour des extensions de services fournis par les loTs (JP2017219930). Toutefois, ces méthodes et dispositifs sont désorganisés et ne permettent pas une organisation du partage des fonctionnalités entre loTs.

On connait aussi du document US 2016/119434 A1 une solution de partage de ressources entre un loT demandeur et un loT fournisseur intégrant une négociation entre les objets connectés pour le compte d'un loT demandeur.

En effet, le partage de fonctionnalités peut entrainer une saturation des ressources par exemple ou la fonctionnalité elle-même qui n'est plus disponible pour répondre à l'ensemble des demandes. Ainsi, le partage de fonctionnalité est mal employé et mal organisée.

A ce jour, aucune solution ne permet le partage ordonnancé de fonctionnalités des loTs appartenant à des réseaux de communication différents pour mettre en oeuvre une ou plusieurs fonctionnalités, permettant de réduire les coûts de fabrication et permettant de réduire la consommation de ressources sans entrainer de saturation de ladite fonctionnalité ou des ressources. Ainsi, il existe un besoin pour de nouveaux procédés, dispositifs ou systèmes pour permettre le partage de ressource entre loTs afin d'enrichir les fonctionnalités de loTs de différents réseaux tout en permettant une meilleure organisation du partage en ressource.

### [Problème technique]

L'invention, laquelle est définie par l'objet des revendications indépendantes, a donc pour but de remédier aux inconvénients de l'art antérieur. En particulier l'invention a pour but de proposer un procédé de partage ordonnancé des fonctionnalités des loTs dans une infrastructure d'objets connectés comportant une pluralité de passerelles de connexion à des sous réseaux de transport de données pouvant présenter des normes de communication différentes, ledit procédé permettant de maitriser et de réduire les coûts de fabrication. Le procédé permet également de réduire les coûts d'utilisation notamment grâce à la mutualisation des ressources. Le procédé permet le partage de fonctionnalités entre loTs sans entrainer une saturation des ressources et donc un disfonctionnement dans le partage des fonctionnalités, mais également d'enrichir les fonctionnalités des loTs. En outre, le procédé selon l'invention permet également de réduire la consommation en ressources et particulièrement en ressources rares.

L'invention a en outre pour but de proposer un dispositif de partage pour le partage ordonnancé des fonctionnalités des loTs dans une infrastructure d'objets connectés comportant une pluralité de passerelles de connexion à des sous réseaux de transport de données pouvant présenter des normes de communication différentes, ledit dispositif permettant de réduire les coûts de fabrication ainsi que la consommation de ressources et de ressources rares sans entrainer de saturation des ressources et donc un mauvais fonctionnement du partage des fonctionnalités voir une absence complète du partage de fonctionnalités. En outre, le dispositif permet aux loTs d'offrir des fonctionnalités plus grandes qu'ils ne pourraient présenter sans le partage de fonctionnalités entre loTs.

L'invention se rapporte également à un système de partage pour le partage ordonnancé des fonctionnalités des loTs dans une infrastructure d'objets connectés comportant une pluralité de passerelles de connexion à des sous réseaux de transport de données pouvant présenter des normes de communication différentes, ladite infrastructure d'objets connectés comprenant au moins un loT demandeur et au moins un loT fournisseur, chacun étant apte à accéder à au moins une passerelle de la pluralité des passerelles de connexion, ledit système de partage comprenant en outre un dispositif de partage.

### [Brève description de l'invention]

A cet effet, l'invention porte sur un procédé, selon la revendication 1, de partage ordonnancé des fonctionnalités des loTs dans une infrastructure d'objets connectés comportant une pluralité de passerelles de connexion à des sous réseaux de transport de données pouvant présenter des normes de communication différentes, ladite infrastructure d'objets connectés comprenant au moins un dispositif de partage, au moins un loT demandeur et au moins un loT fournisseur, chacun des loT étant aptes à, de préférence configuré pour, accéder à au moins une passerelle de la pluralité des passerelles de connexion.

Le procédé permet de proposer des nouvelles fonctionnalités à des loTs dépourvus des modules, mémoires, processeurs ou capteurs nécessaire à la mise en oeuvre de telles fonctions. Ainsi, ils pourront mettre en oeuvre des fonctionnalités à partir de ressources partagées avec d'autre loT. Le procédé permet également le partage de ressource selon une exécution optimale du partage afin d'éviter toute saturation en ressource ou disfonctionnement du partage en ressources entre loTs. Ainsi, le procédé permet aux loTs de partager et de mutualiser leurs ressources afin d'augmenter leur fonctionnalité sans entrainer un disfonctionnement ou une saturation accidentelle ou inattendu en ressource et donc un disfonctionnement d'un ou plusieurs loTs. Ainsi, loTs peuvent être plus minimaliste et donc nécessiter moins d'énergie pour assurer leur fonctionnement.

En outre, le procédé permet le partage de ressource entre loTs pour optimiser l'utilisation des ressources et diminuer les coûts de fabrication des loTs selon une meilleure organisation ce qui simplifie également le partage des ressources.

Ainsi, grâce au procédé selon l'invention un loT qui présente des fonctionnalités nécessitant des ressources particulières non détenues par l'IoT pour mettre en oeuvre lesdites fonctionnalités, peut rechercher ces ressources sur un réseau pour mettre en oeuvre ses fonctionnalités. Le procédé permet une collaboration simplifiée et organisée entre loTs afin d'améliorer les fonctionnalités d'un loT tout en optimisant les ressources. Les fonctionnalités et ressources de l'IoT demandeur sont donc améliorées (augmentées).

Selon l'invention, l'étape de communication comprend la réception par le dispositif de partage d'une durée d'utilisation et l'étape de recherche comprend l'identification de l'IoT fournisseur selon la durée d'utilisation.

**Selon d'autres caractéristiques optionnelles du procédé, ce dernier peut inclure facultativement une ou plusieurs des caractéristiques suivantes, seules ou en combinaison :**
- le message de requête de partage comprend un protocole de communication de l'IoT fournisseur afin que l'IoT demandeur accède à la fonctionnalité de l'IoT fournisseur.
- il comprend une étape de centralisation, par le dispositif de partage, de l'ensemble des données de fonctionnalités proposées et des données de fonctionnalités recherchées des différents loTs présents sur un ou plusieurs sous-réseaux, la centralisation permet d'optimiser l'étape de recherche et d'améliorer l'efficacité du procédé en améliorant le partage des fonctionnalités. En outre, la centralisation permet un gain de temps. Grâce à la centralisation, l'ensemble des données de ressources proposées sont regroupées ce qui se traduit également par un accès à des données de ressources plus étendues et de façon optimisée.
- le message de requête de partage comprend un protocole de communication de l'IoT fournisseur afin que l'IoT demandeur accède à la fonctionnalité de l'IoT fournisseur, ceci permet de favoriser le partage de fonctionnalités entre loTs.
- il comprend une étape de mémorisation des données de fonctionnalités recherchées et des données de fonctionnalités proposées, par le dispositif de partage, ladite mémorisation pouvant être locale, distante, ou partagée. La mémorisation permet l'enregistrement et le stockage des données de fonctionnalités de chaque loT communiquant avec le dispositif de partage. En outre, la mémorisation permet au dispositif de partage d'augmenter et d'améliorer l'accessibilité aux différentes données de fonctionnalités des loTs présents sur les différents sous réseaux. Ceci se traduit notamment par un gain de temps.
- l'étape de mémorisation comprend l'enregistrement et le stockage des périodes temporelles prédéterminées et des durées d'utilisation prédéterminées des loTs demandeurs.
- il comprend une étape de mise à jour des données de fonctionnalités recherchées mémorisées et des données de fonctionnalités proposées mémorisées, selon une ou plusieurs fréquences paramétrables. La mise à jour permet d'assurer une conformité des données de fonctionnalités proposées et recherchées tout en permettant d'actualiser les données en fonctionnalités proposées et recherchées. En outre, la mise à jour permet une correspondance des données de fonctionnalités recherchées et proposées de l'état actuel des besoins des loTs. En outre, la mise à jour permet d'améliorer l'efficacité du partage des fonctionnalités entre loTs. De façon avantageuse la mise à jour peut aussi permettre de corriger une potentielle anomalie.
- il comprend une procédure d'attribution de niveau de priorité pour chaque donnée de fonctionnalités proposées, ladite attribution de niveau de priorité comprenant l'exécution par le dispositif de partage d'au moins une fonction de priorisation pour calculer des niveaux de priorité pour chaque donnée de fonctionnalités proposée. Ceci permet de définir un niveau de priorité pour chaque loT fournisseur. Cela permet d'optimiser l'utilisation des fonctionnalités et plus particulièrement le partage des fonctionnalités et de gérer de façon dynamique le partage des fonctionnalités. Ceci permet une optimisation des coûts des ressources. En outre, l'utilisation d'une fonction de priorisation permet de gérer la priorisation des loTs fournisseurs au niveau du dispositif de partage et donc de pouvoir facilement mettre en place un tel procédé tout en garantissant une comparabilité des niveaux de priorité.
- l'exécution d'au moins une fonction de priorisation pour calculer au moins deux niveaux de priorité pour chaque donnée de fonctionnalité proposée par chaque loT fournisseur, chacun des niveaux de priorité calculé étant associé à une donnée de fonctionnalité proposée d'un loT fournisseur.
- l'étape de recherche comprend le classement, par le dispositif de partage, de chaque donnée de fonctionnalités proposée par ordre de leur niveau de priorité respectif en vue de l'identification de l'IoT fournisseur. Ceci permet un gain de temps lors de la sélection de l'IoT fournisseur. Le dispositif de partage détermine en fonction des fonctionnalités à partager l'IoT fournisseur qui sera le plus adapté. En outre, cela permet également l'optimisation de l'utilisation des loTs fournisseurs.
- il comprend une étape d'analyse par l'IoT demandeur du besoin en fonctionnalités de l'IoT demandeur selon une plage temporelle prédéterminée et une durée d'utilisation prédéterminée de ladite fonctionnalité.
- il comprend une étape de mise à disposition des fonctionnalités du ou des loTs fournisseur de façon continue, ponctuelle ou selon une fréquence d'utilisation.
- l'étape de communication comprend la réception par le dispositif de partage d'une durée d'utilisation prédéterminée et l'étape de recherche comprend l'identification de l'IoT fournisseur selon la durée d'utilisation.

**Selon un autre aspect,** l'invention se rapporte à **un dispositif** de partage selon la revendication 12.

En particulier, la mémoire de donnée peut être configurée pour mémoriser des niveaux de priorité des loT fournisseurs en fonction de la plage horaire et de la durée d'utilisation prédéterminée.

Selon **un autre aspect,** l'invention concerne **un système de partage** selon la revendication 14.

D'autres mises en oeuvre de l'invention comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

D'autres avantages et caractéristiques de l'invention apparaitront à la lecture de la description suivante donnée à titre d'exemple illustratif et non limitatif, en référence aux Figures annexées :
Figure 1 un schéma montrant une architecture de réseaux locaux comprenant plusieurs objets connectés dont un objet connecté pouvant utiliser plusieurs réseaux locaux.
Figure 2 représente un diagramme d'un mode de réalisation du procédé selon l'invention.
Figures 3A et 3B deux diagrammes fonctionnels illustrant un mode de réalisation du procédé et les échanges au sein d'une architecture informatique selon un mode de réalisation de l'invention.
Figure 4 un schéma montrant l'architecture d'un dispositif de partage selon un mode de réalisation de l'invention.
Figure 5 représente un schéma d'un système de partage selon un mode de réalisation de l'invention.
Figure 6 représente un schéma d'un système de partage selon un mode de réalisation de l'invention.
Figure 7 représente un schéma d'un système de partage selon un mode de réalisation de l'invention.
Figure 8 représente un schéma d'un système de partage selon un mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

### [Description de l'invention]

Dans la suite de la description, on entend par « **objets connectés** » un dispositif ou système électronique connecté, de préférence sans fil, à un réseau et pouvant partager des informations avec un serveur, un ordinateur, une tablette électronique, un smartphone, un réfrigérateur, une imprimante ou tout autre appareil électronique apte à se connecter à un réseau de communication.

On entend par « **loT fournisseur** » au sens de l'invention un objet connecté apte à échanger une ou plusieurs fonctionnalités, une ou plusieurs informations, une ou plusieurs capacités, une ou plusieurs fonctionnalités ou de manière plus globale au moins un service sur requête d'un loT demandeur.

On entend par « **loT demandeur** » au sens de l'invention un objet connecté apte à envoyer un message de requête.

L'expression « **sous-réseau** » ou « **réseau local** » au sens de l'invention correspond par exemple à des réseaux locaux, auxquels sont connectés des objets connectés, servis chacun par au moins une passerelle de connexion à un réseau principal tel qu'Internet.

L'expression « **réseau principal** » au sens de l'invention est un réseau étendu, à haut débit, utilisant un protocole de transport fiable en mode connecté, comme par exemple le protocole TCP/IP (TCP ou « Transmission Control Protocol » étant un protocole de couche 4 du modèle OSI ou « Open Systems Interconnection » selon une terminologie anglo-saxonne, sur IP qui est un protocole de la couche 3 du modèle OSI). Le protocole TCP/IP est documenté dans la RFC 7931 de l'IETF (« Internet Engineering Task Force » selon une terminologie anglo-saxonne). Il peut s'agir par exemple d'un réseau **Internet.**

On entend par « **passerelle** » ou « **passerelle de connexion** » au sens de l'invention, un équipement assurant la connexion entre des équipements appartenant à des réseaux différents, par exemple assurant la connexion des équipements d'un réseau local (adresses IP locales, pour « Internet Protocol » selon une terminologie anglo-saxonne) et des services internet (adresses IP publiques). De ce fait, une telle passerelle possède les deux types d'adresses IP. Son adresse IP publique, attribuée par le fournisseur d'accès internet, plus communément désigné par l'acronyme « FAI », lui permet d'échanger les données avec le réseau Internet. Son adresse IP locale lui permet d'échanger des données avec les équipements du réseau local. Elle est généralement spécifique et attribuée par défaut par le FAI.

On entend par « **disponibilité** » au sens de l'invention une période de temps dont un ou plusieurs intervalles temporels sont libres d'accès pour permettre aux loTs de se connecter à Internet, au dispositif de partage, à une passerelle de connexion ou encore à un loT présent dans l'infrastructure d'objets connectés.

On entend par « **période de temps** » au sens de l'invention une durée dans le temps pouvant comprendre une pluralité d'intervalles temporel. Une période peut correspondre à un ou plusieurs jours, une ou plusieurs semaines, un ou plusieurs mois, une ou plusieurs années, mais aussi à des périodes plus courtes telles qu'une ou plusieurs heures.

Par « **intervalle temporel** » au sens de l'invention on entend un espace-temps, limité dans le temps entre deux instants. Un intervalle de temps peut correspondre à un ou plusieurs jours, une ou plusieurs semaines, un ou plusieurs mois, une ou plusieurs années, mais aussi à des périodes plus courtes telles qu'une ou plusieurs heures. De préférence un intervalle temporel comprend un indicateur de début et de fin accompagné d'une durée ou bien un intervalle temporel comprend un indicateur de début ou de fin, l'indicateur étant accompagné d'une durée.

Au sens de l'invention « **message** » correspond à un message envoyé entre des objets connectés au travers d'au moins une passerelle ou entre objet connecté et passerelle ou encore entre passerelles ou encore entre loT et dispositif de partage ou entre passerelle de connexion et dispositif de partage ; et comprenant des données pouvant inclure des informations relatives à leur état et à celui de leur environnement, des données de fonctionnalités recherchées ou des données de fonctionnalités proposées, un protocole de communication ou encore un identifiant. Le format de ces données peut par exemple correspondre à des fichiers, à des flux média (vidéo, son) ou encore à des valeurs codées. On entend par « **message de requête** » au sens de l'invention un message envoyé par au moins un objet connecté et comprenant des données de fonctionnalités recherchées par l'objet connecté demandeur ou des données de fonctionnalités proposées par l'IoT demandeur ou des données de fonctionnalités proposées par un loT fournisseur.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçue pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (« ASIC » selon une terminologie anglo-saxonne) et un circuit logique programmable. Un seul processeur ou plusieurs autres unités peuvent être utilisées pour mettre en oeuvre l'invention.

On entend par « **module** » au sens de l'invention, un dispositif, un élément physique ou virtuel pouvant faire partie d'un système et pouvant posséder ses propres mécanismes interne (pilotes et périphériques etc...), capacités et fonctionnalités. Un module au sens de l'invention peut correspondre à une extension, une carte, un code, un pilote, un programme, un logiciel, un disque, un fichier, une extension, un équipement informatique, un composant ou périphérique, etc...

Par « **sonde** » ou « **sonde informatique** », on entend au sens de l'invention un logiciel associé à un équipement qui permet d'effectuer, de gérer et de faire remonter vers un équipement informatique des mesures, des valeurs de paramètres, des données de connectivité etc....

On entend par « **ressources** » au sens de l'invention l'aptitude d'un objet connecté à réaliser, faire, ou mettre en oeuvre une fonctionnalité. Par exemple il peut s'agir d'une fonction de stockage, d'un code, d'un programme ou sous-programme, une séquence d'instructions mais également de ressource physique telle que mémoire, CPU, disque, capteurs.

On entend par « **fonctionnalité** » au sens de l'invention une action particulière qui amène une possibilité ou la réalisation d'une certaine tâche, action. Par exemple une fonctionnalité peut être téléphoner, envoyer un message, photographier, filmer, lire, guider, surveiller, stocker, calculer etc... Une fonctionnalité désigne ainsi ce qui est perceptible.

On entend par « **des données de fonctionnalités recherchées** » au sens de l'invention des données relatives à une ou plusieurs fonctionnalités manquantes à un loT demandeur pour optimiser son fonctionnement ou mettre en oeuvre une de ses fonctionnalités. Cela peut par exemple correspondre à des capteurs, des capacités de calcul, un besoin de stockage, etc...

On entend par « **des données de fonctionnalités proposées** » au sens de l'invention des données relatives à une ou plusieurs fonctionnalités détenues par un loT fournisseur et que l'IoT fournisseur pourrait mettre à disposition d'un loT demandeur pour optimiser son fonctionnement ou mettre en oeuvre une de ses fonctionnalités

On entend par « **ressources rares** » au sens de l'invention des ressources de préférence minérales, par exemple Lithium, Or, mais aussi des composants rare tel que des composant présentant un coût de fabrication, de production ou d'achat élevé.

On entend par « **correspondance** » au sens de l'invention au moins 50 % d'identité entre au moins deux entités, de préférence au moins 70 % et de manière encore plus préférée au moins 90 % d'identité entre au moins deux entités. Une « **entité** » peut être considérée comme une ou plusieurs listes, un ou plusieurs fichiers, un ensemble de données ou une donnée, pouvant être sous différents formats.

On entend par « **partage** » au sens de l'invention, un échange, de préférence sans contrepartie, une mise à disposition ou fourniture ou encore l'allocation ou la procuration de données de fonctionnalités.

On entend par « **niveaux de priorité** » ou « **niveau de priorité** » un ordonnancement croissant selon des valeurs de caractéristiques ou paramètres tels que le type de donnée de fonctionnalités, le coût, le niveau de sécurité, la nature de la connexion requise, une durée, une plage horaire, un format etc... pour calculer une valeur de priorité qui correspond au niveau de priorité de chaque donnée de fonctionnalités proposée. Autrement dit, si P(fRP1) > P(fRP1) alors la donnée de fonctionnalité proposée RP1 sera prioritaire sur la donnée de ressource proposée RP2. Cela peut également s'appliquer à des messages de requête.

L'expression « **fonction de priorisation** » au sens de l'invention peut correspondre à un protocole ou à une série d'instructions permettant de calculer un niveau de priorité à partir de valeurs de caractéristiques ou paramètres et selon une fonction ou formule prédéterminée.

On entend par « **régulation** » au sens de l'invention, un contrôle ou un maintien ou une maîtrise de la connectivité des objets connectés à Internet. En outre, une régulation au sens de l'invention peut comprendre une planification du partage des fonctionnalités.

On entend par « **planification** » au sens de l'invention une programmation du partage de fonctionnalités entre loT suivant des périodes de temps déterminées.

Au sens de l'invention « **plage horaire** », correspond à une période de temps, pouvant être définie en secondes, minutes, heures ou date et comprenant un indicateur de début et de fin ou un indicateur de début ou de fin accompagné d'une durée.

Au sens de l'invention « **durée d'utilisation** » correspond à une plage horaire durant laquelle la fonctionnalité sera utilisée ou consommée.

Dans les revendications, le terme **"comprendre"** ou **"comporter"** n'exclut pas d'autres éléments ou d'autres étapes.

Dans la suite de la description, les mêmes références sont utilisées pour désigner les mêmes éléments. Les signes de référence ne sauraient être compris comme limitant la portée de l'invention. En outre, les différentes caractéristiques présentées et/ou revendiquées peuvent être avantageusement combinées. Leur présence dans la description ou dans des revendications dépendantes différentes, n'excluent pas cette possibilité.

Les objets de notre quotidien ou de nos industries sont de plus en plus souvent connectés et aptes à échanger des données avec Internet. En outre, il existe de plus en plus d'objets connectés présentant une pluralité de fonctionnalités et où chacun de loT n'aura pas les mêmes ressources ni même capacité pour mettre en oeuvre chaque fonctionnalité. Ainsi, un appareil réfrigérateur connecté ne possède pas la fonctionnalité, les ressources nécessaires et requises pour utiliser les données d'un capteur d'une sonde de température d'une station météo connectée. En outre, le réfrigérateur n'a pas besoin d'un accès illimité à cette donnée de température mais selon une plage horaire déterminée et une durée d'utilisation prédéterminée. Ce qui permettrait au réfrigérateur d'optimiser sa régulation du froid sans entrainer une consommation excessive des ressources pouvant entrainer une saturation et un disfonctionnement de la fonctionnalité de la sonde de température. Le réfrigérateur connecté peut fonctionner sans cette sonde mais ses fonctionnalités seront alors réduites et peu optimisées. En outre, l'ajout d'une sonde directement au réfrigérateur augmenterait ses coûts de fabrication.

Ainsi, les inventeurs ont développé un nouveau procédé 100 de partage ordonnancé des fonctionnalités des loTs dans une infrastructure d'objets connectés comportant une pluralité de passerelles GW1,GW2,GW3,GW4 de connexion à des sous réseaux 11,12,13,14 de transport de données pouvant présenter des normes de communication différentes, ladite infrastructure d'objets connectés comprenant au moins un loT demandeur loT1 et au moins un loT fournisseur loT2, chacun étant aptes à accéder à au moins une passerelle de la pluralité des passerelles de connexion.

Un tel procédé 100 permet d'optimiser le fonctionnement des loTs. Le procédé 100 permet aux loTs de partager leur fonctionnalités, ressources et capacités afin d'augmenter leur fonctionnalité et d'enrichir leur fonctionnalité. Le procédé 100 permet le partage d'informations tel que des données de fonctionnalités entre loTs pour optimiser les ressources et diminuer les coûts de fabrication ainsi que les coûts d'utilisation. Ainsi, grâce au procédé selon l'invention un loT qui présente des fonctionnalités et dont d'autres loTs ne possèdent pas les ressources et capacités nécessaires pour mettre en oeuvre lesdites fonctionnalités, peut rechercher ces fonctionnalités et capacités sur les réseaux (réseau local, sous réseau ou Internet) ou dans l'infrastructure d'objets connectés pour mettre en oeuvre ses fonctionnalités. Le procédé permet une collaboration entre loTs afin d'améliorer les fonctionnalités d'un loT tout en optimisant les ressources. Les capacités et fonctionnalités de l'IoT demandeur sont donc améliorées (augmentées). En outre, le procédé permet une meilleure organisation du partage de ressource entre loT et simplifie également le partage des fonctionnalités entre loT.

L'invention va être décrite dans le contexte d'une pluralité de sous-réseaux reliés à un réseau principal. L'invention ne se limite pas, toutefois, à cet exemple, et peut trouver des applications dans toutes autres configurations dans laquelle il y a un ou plusieurs sous-réseaux communiquant ou non entre eux, comprenant un ou plusieurs dispositifs de partage.

L'invention se rapporte en particulier à un procédé de partage ordonnancé des fonctionnalités des loTs dans une infrastructure d'objets connectés comportant une pluralité de passerelles de connexion à des sous réseaux de transport de données pouvant présenter des normes de communication différentes.

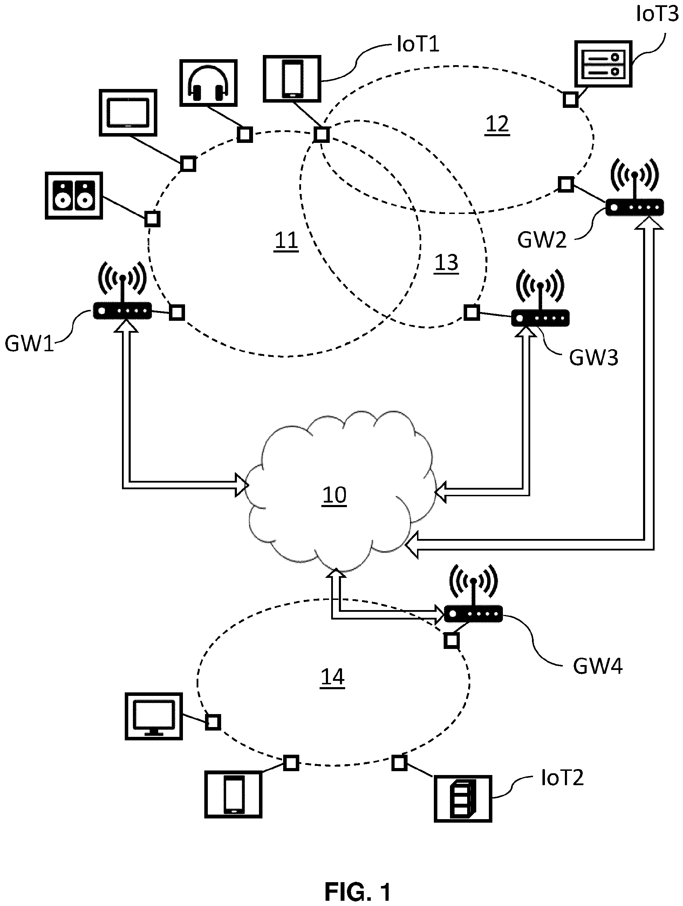

En référence au schéma de **la** **figure 1****,** une architecture de réseaux locaux à laquelle un procédé conforme à l'invention peut avantageusement s'appliquer, comprend plusieurs sous-réseaux tels que par exemple un premier sous-réseau 11, un deuxième sous réseau 12 et un troisième sous réseau 13 distincts auxquels est connecté un objet connecté loT1, ces sous-réseaux étant connectés chacun au réseau principal 10. Le réseau principal 10 dans l'exemple représenté, est le réseau Internet. Le réseau principal 10 étant lui-même connecté à un sous réseau 14.

Dans l'exemple représenté à la figure 1, le sous-réseau 11 comprend au moins **une passerelle de connexion,** comme la passerelle GW1 de connexion à Internet. De même, les sous-réseaux 12,13,14 comprennent chacun au moins une passerelle de connexion comme les passerelles de connexion GW2, GW3, et GW4 de l'exemple représenté. En particulier, dans l'exemple représenté et décrit par la suite, la passerelle GW3 permet d'accéder à un réseau de type LTE tandis que la passerelle GW2 est un accès satellite. Les passerelles permettent le transport de données entre diverses entités physiques ou virtuelles par exemple entre des loTs distincts appartenant à des sous-réseaux différents ou à un même sous-réseau, mais aussi entre un ou plusieurs sous-réseaux et Internet ou encore avec le dispositif de partage. Dans certains cas, un sous-réseau peut comporter plus d'une passerelle de connexion.

Chacun des réseaux locaux 11, 12, 13 et 14, comprend **un ou plusieurs objets connectés.** Une pluralité d'objets connectés peut correspondre à au moins un objet connecté, à deux objets connectés, à des dizaines, à des centaines voire à des milliers d'objets connectés ; chacun ayant une puissance de traitement qui lui est propre, des exigences de qualité de service, différents types de données ayant un débit différent et par conséquent différents besoin en bande passante pour communiquer avec Internet sans porter préjudice à la qualité de service. Chaque objets connectés présentent également ses propres ressources, capteurs, fonctions, fonctionnalités et capacités De manière non-limitative, ces objets connectés peuvent être : un téléphone portable connecté, une tablette connectée, un ordinateur portable connecté, des enceintes connectées, un casque audio connecté, une caméra connectée, un serveur, un capteur, une installation solaire, une station météo, un réfrigérateur connecté, une imprimante connectée, un périphérique virtuel tel qu'une application, des dispositifs commerciaux ou domotiques, tels que des systèmes de gestion d'énergie et de ressource etc.... L'invention n'entend pas être limitée, ni par le nombre ni par la nature des objets ainsi connectés aux sous-réseaux 11, 12, 13 et 14. Il peut s'agir de tout objet électronique associé à un objet physique, lieu ou personne identifiés. Chaque objet est identifié par un code individuel unique qui le distingue de tous les autres au sein du réseau local concerné, par exemple un code-barre, un code EAN (« European Article Numbering » selon une terminologie anglo-saxonne), un code EPC (« Electronic Product Code » selon une terminologie anglo-saxonne), etc,.

On notera que l'identification des objets suit une tendance lourde, dans le contexte de l'émergence de l'IoT, vers l'attribution d'une adresse IP unique propre à chaque objet connecté. C'est pourquoi, dans ce qui suit, on considérera en tant que de besoin que l'identifiant unique de chaque objet connecté de chaque sous-réseau est une adresse IP. Ceci n'est toutefois pas un prérequis des modes de mise en oeuvre d'un procédé conforme à l'invention. En effet, l'interface entre les objets connectés des réseaux locaux et d'autres sous réseaux ou le réseau Internet, dont les connexions sont des connexions IP, est assurée par les passerelles GW1, GW2, GW3 et GW4 montrées à la figure 1, qui peuvent gérer une conversion ou correspondance d'adresses entre un espace d'adressage quelconque d'un sous-réseau d'une part, et l'espace d'adressage IP d'un réseau principal (e.g. internet) d'autre part.

**Les sous-réseaux** 11, 12, 13 et 14 peuvent être des réseaux spécifiquement dédiés aux objets connectés comme par exemple :
- un réseau Sigfox ;
- un réseau LoRa utilisant le protocole LoRaWAN (acronyme de « Long Range Wide-area Network » selon une terminologie anglo-saxonne) qui comme son nom l'indique est un réseau étendu à longue portée ; un réseau LPWA ou LPWAN
- ou bien des réseaux basés sur un autre protocole sans fil, ou filaire, y compris par des réseaux optiques par ondes radio comme par exemple :
   - un réseau à dimension personnelle (ou WPAN, de l'anglais « Wireless Personal Area Networks ») comme un réseau ZigBee basé sur la norme IEEE 802.15.4 ;
   - un réseau Wi-Fi ;ou un réseau Bluetooth (norme IEEE 802.15.1) ; etc.
- ou bien un réseau cellulaire, LTE/LTE-A 4G ou 5G.
Les objets connectés peuvent également fonctionner avec l'utilisation de protocole d'application réseau tel que le protocole d'application contraint (CoAP). Les loTs peuvent également être intégrés à des périphériques coordinateurs fournissant une chaîne de liens formant une arborescence de périphériques et de réseaux.

La présente invention se présente comme un mécanisme permettant le partage des fonctionnalités entre objets connectés appartenant à plusieurs sous-réseaux connectés à un réseau principal (i.e. Internet). Dans les réseaux de communications de données, les protocoles de la couche de transport ont ainsi pour vocation de transporter les données d'une application à une autre (on parle aussi de programmes applicatifs), qui s'exécutent sur des machines hôtes respectives et potentiellement dans des réseaux locaux respectifs distants l'un de l'autre, et connectés ensemble par l'intermédiaire d'un réseau étendu comme Internet.

En particulier, comme cela est représenté dans la figure 1, un des objets connectés loT1 est capable de se connecter aux trois sous-réseaux 11, 12, 13 disposants chacun d'une passerelle de connexion. Ainsi, l'objet connecté loT1 dispose de plusieurs sous réseaux pour communiquer avec Internet par l'intermédiaire de passerelle de connexion, et chaque loT de chaque sous-réseau peut communiquer avec Internet.

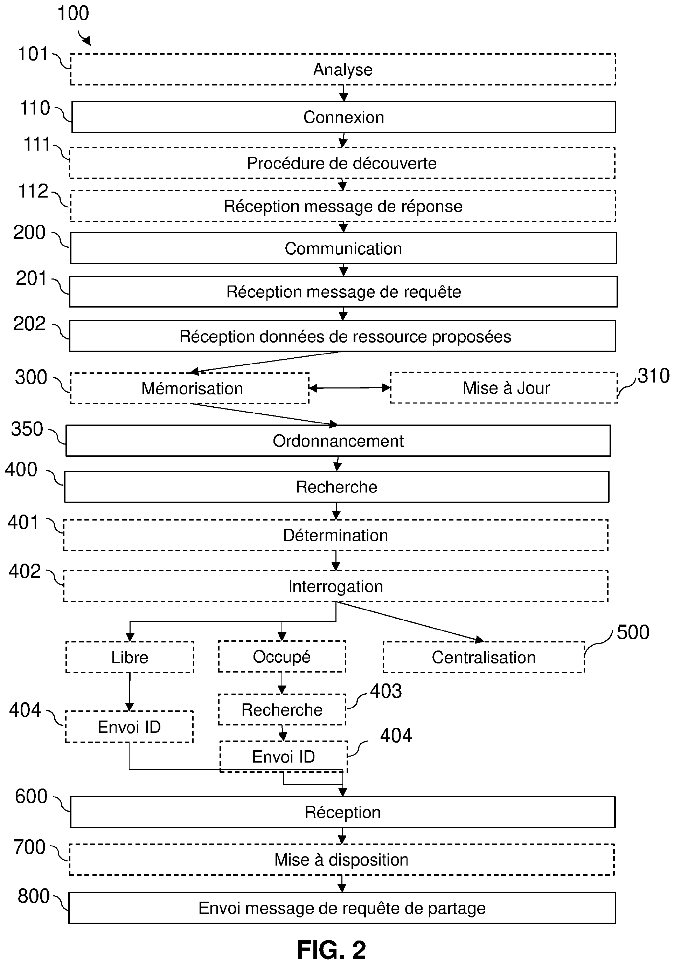

**Selon un premier aspect,** l'invention se rapporte à **un procédé 100 de partage** ordonnancé des ressources des loTs dans une infrastructure d'objets connectés tel qu'illustré à la **Figure 2****.**

Ladite infrastructure d'objets connectés comprend au moins un dispositif de partage 1, un loT demandeur IoT1 et au moins un loT fournisseur loT2, chacun étant aptes à accéder à au moins une passerelle de la pluralité des passerelles de connexion GW1,GW2,GW3,GW4.

Un procédé 100 de partage ordonnancé des fonctionnalités des loTs comporte les étapes de communication 200 entre l'IoT demandeur et le dispositif de partage, de recherche 400 d'une correspondance, d'ordonnancement 450 des données de fonctionnalités recherchées, de détermination 600 d'un intervalle temporel et d'envoi 800 d'un message de requête de partage de fonctionnalité recherchée, entre l'IoT demandeur loT1 et l'IoT fournisseur loT2 selon un protocole de communication PC de l'IoT fournisseur loT2.

Un procédé 100 de partage selon l'invention peut également comporter les étapes de connexion 110 de l'IoT demandeur à un sous réseau, de centralisation 500 des données de fonctionnalités proposées et des données de fonctionnalités recherchées des différents loTs présents sur un ou plusieurs sous-réseaux, de mémorisation 300 des données de fonctionnalités proposées et des données de fonctionnalités recherchées, de mise à jour 310 des données de fonctionnalités recherchées et proposées préalablement mémorisées, et de mise à disposition 700 des données de fonctionnalités proposées de façon continue, ponctuelle ou selon une fréquence d'utilisation, d'attribution 351 de niveau de priorité, d'identification 353 d'un loT fournisseur et de classement 352, par le dispositif de partage, de chaque donnée de ressource proposée par ordre de leur niveau de priorité respectif en vue de l'identification de l'IoT fournisseur.

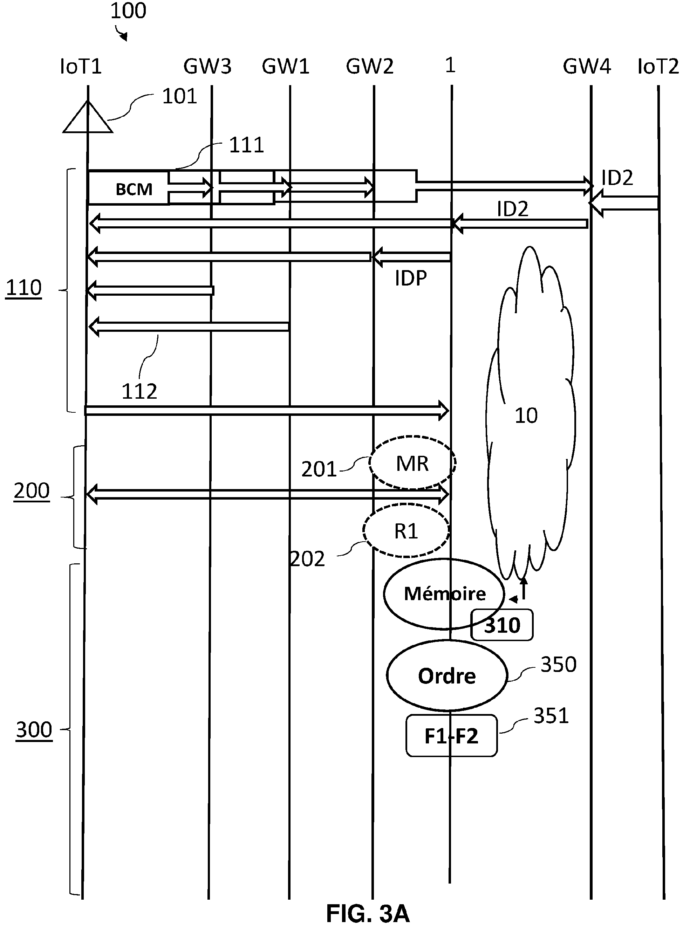

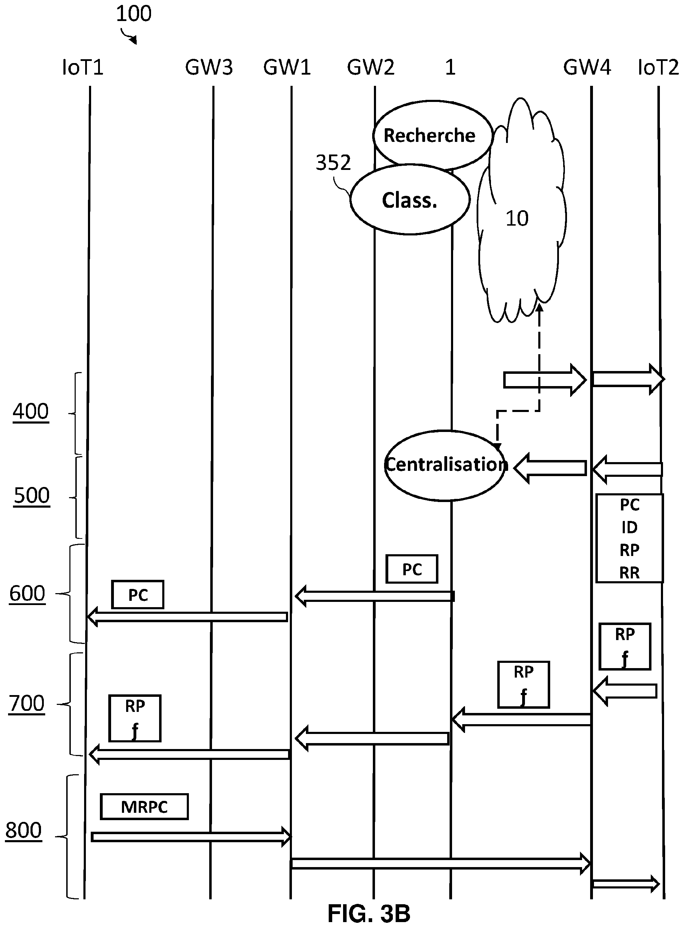

Dans l'exemple illustré dans les **figures 3A** **et** **3B****,** un loT demandeur loT1 est configuré pour accéder à plusieurs passerelles GW1,GW2, GW3, GW4 qui sont adaptées, comme la passerelle GW2, à communiquer avec le dispositif de partage 1. Dans ce mode de réalisation illustré aux figures 3A & 3B, le dispositif de partage 1 se situe au niveau du sous réseau. Toutefois, ce mode de réalisation n'est pas limitatif et le procédé peut être mis en oeuvre dans une configuration différente telle que le dispositif de partage soit embarqué sur un loT.

Le procédé selon l'invention peut comprendre **une étape préalable d'analyse 101** par l'IoT demandeur loT1 du besoin en ressources, capacités, fonctionnalités, capteurs etc... qui lui sont nécessaires pour réaliser sa fonction, sa fonctionnalité ou une optimisation de son fonctionnement. En outre, l'étape d'analyse comprend également l'analyse du besoin en fonctionnalité de l'IoT demandeur selon une plage temporelle prédéterminée et une durée d'utilisation prédéterminée de ladite fonctionnalité. Ainsi l'IoT demandeur loT1 est configuré pour déterminer quelles ressources, capacités, fonctionnalités, capteurs il lui manque à quel moment et pour quelle durée. Ces ressources, capacités, fonctionnalités, capteurs, plage temporelle et durée peuvent être regroupés sous forme de fichier, données ou format apte à être transmis et partagé. En outre, au cours de l'étape d'analyse, l'IoT demandeur peut aussi analyser les fonctionnalités, ressources, capteurs et capacités qu'il n'utilise pas, de préférence selon une période temporelle prédéterminée et selon une durée d'inutilisation prédéterminée. Ainsi, L'IoT demandeur est apte à de préférence configuré pour déterminer quelles données de fonctionnalités lui sont nécessaires, selon une période temporelle et une durée d'utilisation et également déterminer quelle données de fonctionnalités il peut mettre à disposition, selon quelle période temporelle et selon quelle durée d'utilisation qui correspond à durée d'inutilisation.

Le procédé selon l'invention peut comprendre **une étape de connexion 110** de l'IoT demandeur loT1 à un sous réseau, ledit sous réseau comprenant au moins le dispositif de partage 1.

Pour cela l'IoT demandeur loT1 lance tout d'abord **une procédure de découverte 111** de passerelles disponibles pour ledit loT demandeur loT1, à savoir les passerelles GW1,GW2,GW3 et GW4.

Comme cela est illustré, la procédure de découverte comprend la diffusion par l'IoT demandeur loT1 d'un message d'interrogation (message de type BCM, pour « Broadcast Message » en terminologie anglo-saxonne) dans plusieurs sous-réseaux 11,12,13,14 de transport de données. Ce message BCM est alors reçu par les passerelles GW1, GW2, GW3 et GW4 qui sont connectées aux réseaux locaux 11, 12, 13 et 14.

En réponse, l'objet connecté **loT1 reçoit 112** un message de réponse envoyé par chaque passerelle de connexion disponible ayant reçu le message d'interrogation. De préférence, le message de réponse envoyé par chaque passerelle comprend des données d'identification des objets connectés au sous réseau auquel elles sont rattachées. Par exemple la passerelle GW4 comprend des données d'identification ID2 de l'objet connecté loT2.

En outre, le message de réponse peut comprendre des données d'identification du dispositif de partage IDP. En effet, le dispositif de partage 1 appartenant à un sous réseau, une passerelle peut faire la connexion entre l'IoT demandeur IoT1 et le dispositif de partage 1. Alternativement, les passerelles pouvant appartenir à différents sous-réseaux et chaque sous réseau ne comprenant pas obligatoirement un dispositif de partage, la connexion entre plusieurs passerelles de plusieurs sous réseaux jusqu'au dispositif de partage 1 est alors autorisée. Ceci permet d'assurer à chaque loT un dispositif de partage accessible. Ainsi une passerelle de connexion peut connecter l'IoT demandeur loT1 au dispositif de partage 1 d'un même sous réseau ou plusieurs passerelles de connexion peuvent connecter l'IoT demandeur loT1 au dispositif de partage 1 d'un même sous réseau.

Selon un mode de réalisation optionnel, une passerelle de connexion peut connecter l'IoT demandeur loT1 d'un premier sous réseau au dispositif de partage d'un deuxième sous réseau, ou plusieurs passerelles de connexion peuvent connecter l'IoT demandeur loT1 d'un premier sous réseau au dispositif de partage 1 d'un deuxième sous réseau.

L'IoT demandeur loT1 se connecte alors à la passerelle ayant renvoyé un message de réponse comprenant à la fois des données d'identification des objets connectés au sous réseau auquel elles sont rattachées et de préférence des données d'identification du dispositif de partage 1. Cette liaison pouvant alors être directe (une seule passerelle) ou indirecte (plusieurs passerelles connectées entre elles entre l'IoT demandeur loT1 et le dispositif de partage). En outre, l'IoT demandeur loT1 se connecte à la passerelle qui est disponible pour l'IoT demandeur loT1 lorsque celui-ci la sollicite.

Une fois l'IoT demandeur loT1 connecté au sous réseau par l'intermédiaire d'une ou plusieurs passerelles, le procédé comprend **une étape de communication 200** entre l'IoT demandeur IoT1 et le dispositif de partage 1. Cette étape de communication comprend la réception **201** par le dispositif de partage 1 d'un message de requête MR. Le message de requête MR est de préférence émis par l'IoT demandeur loT1 à destination du dispositif de partage 1. Le message de requête MR comprend des données de fonctionnalités recherchées par l'IoT demandeur loT1 selon une plage temporelle prédéterminée et optionnellement d'une durée d'utilisation prédéterminée. Ainsi, l'IoT demandeur loT1 indique au dispositif de partage 1 la (les) ressource(s), fonctionnalité(s), capacité(s) et/ou capteur(s) qu'il recherche pour exécuter selon une plage horaire prédéterminée et une durée prédéterminée sa ou ses fonctions, fonctionnalités, capacités, de préférence via la passerelle à laquelle il s'est connecté.

En outre, un message de requête émis par l'IoT demandeur peut contenir :
- un type de message (par exemple les données de fonctionnalités recherchées dans cet exemple) ;
- une durée d'utilisation (un indicateur de début et/ou de fin, un indicateur de temps) ;
- une plage horaire (un indicateur de début et/ou de fin, un indicateur de temps) ;
- son identifiant unique (par exemple son adresse IP)
- un code d'application identifiant l'application émettrice du message de requête envoyé, et un numéro unique du message incrémenté (en cas de retransmission du même message ou requête MR1) ;
- des données applicatives ;
- une somme de contrôle (« Checksum » en anglais) permettant de valider l'intégrité du message transmis,
- La date d'expiration,
- La passerelle à utiliser pour la réponse, et/ou
- L'heure de la transmission de la réponse.

En outre, le message de requête MR peut comprendre le protocole de communication de l'IoT demandeur loT1. Par exemple, le message de requête MR peut comprendre un protocole de connexion, un protocole de communication, une API afin d'indiquer comment il est possible d'interagir avec sa propre APl, un format, des données d'adressage, de routage, de port, protocole de transport etc...

Par exemple, le protocole de communication peut comprendre une matrice de communication de façon à normaliser l'échange ou les échanges entre loTs pour le partage de fonctionnalité. Une matrice peut par exemple correspondre à un tableau pour le formatage, permettant d'échanger en une seule fois les fonctionnalités.

De façon avantageuse, l'étape de communication selon l'invention entre l'IoT demandeur loT1 et le dispositif de partage 1 peut comprendre la réception **202** par le dispositif de partage des données de fonctionnalités proposées R1 de l'IoT demandeur loT1. Par données de fonctionnalités il peut s'agir de l'espace de stockage disponible, de CPU, de mémoire, de processeur, de pool, APl, mais également de la description des différentes fonctionnalités par exemple de refroidissement, chauffage, surveillance, enregistrement, émission de lumière ou de son, de gestion etc ainsi que de la localisation de la fonctionnalité de l'IoT demandeur loT1. En outre, de façon avantageuse, la réception 202 peut comprendre la réception des données de fonctionnalités proposées de l'IoT demandeur loT1 ayant émis le message de requête MR et d'une plage temporelle prédéterminée associée, et optionnellement d'une durée d'utilisation.

Ainsi, ceci permet à d'autres loT qui communiquent avec le dispositif de partage 1 d'avoir connaissance des données de ressources et fonctionnalités qui peuvent également être mises à leur disposition, selon quelle période temporelle et pendant quelle durée ils pourront bénéficier de la fonctionnalité proposée. En outre, ceci permet également à l'IoT demandeur loT1 de mettre à disposition ses capacités, fonctionnalité, capteurs et ressources.

Cette étape permet d'augmenter l'optimisation des ressources, capacités, fonctionnalités capteur pouvant être partagés entre les différents loTs.

De façon avantageuse, lorsque l'IoT demandeur loT1 communique avec le dispositif de partage 1, l'IoT demandeur loT1 communique également au dispositif de partage son protocole de communication. Ceci permet de faciliter les échanges.

De façon avantageuse, le dispositif de partage et les loTs présentent différentes interfaces de communication (Wifi, ethernet, bluetooth, RTL4333 etc..) et permet aux autres loTs de communiquer via ses interfaces avec d'autres loTs.

Selon un mode de réalisation optionnel, les loTs de différents réseaux peuvent envoyer des données de fonctionnalités au dispositif de partage. Le dispositif de partage 1 peut alors gérer ses données de fonctionnalités de manière distribuée sur chaque réseau loT. En outre, les loT intéressés par les données de fonctionnalités envoyées au dispositif de partage peuvent être à leur tour contactés par le dispositif de partage. Ainsi, les loT ayant été contacté par le dispositif de partage peuvent interagir avec d'autres appareils loT et trouver les fonctionnalités pertinentes à partir d'autres appareils loT qui peuvent être utilisées pour améliorer leurs performances et leur efficacité ou mettre en oeuvre leur fonctionnalité.

En outre, ceci permet d'étendre la communication entre sous réseau, par exemple lors de l'ajout d'un nouvel loT sur un sous réseau.

Selon un mode de réalisation préférée mais non limitatif, le procédé peut comprendre une étape **300 de mémorisation** des données de fonctionnalités recherchées RR et des données de fonctionnalités proposées RP, par le dispositif de partage 1. La mémorisation peut être locale, distante et/ou partagée.

De façon avantageuse, l'étape 300 de mémorisation comprend l'enregistrement et le stockage des données de fonctionnalités s de chaque loT communiquant avec le dispositif de partage 1. Avantageusement, la mémorisation comprend également l'enregistrement et le stockage des périodes temporelles prédéterminées et des durées d'utilisation prédéterminées des loTs demandeurs.

En outre, chaque loT possédant son propre identifiant, l'étape 300 de mémorisation comprend la mémorisation dudit identifiant de l'IoT associé à chacune de ses fonctionnalités.

De plus, l'étape de mémorisation peut comprendre l'enregistrement et le stockage pour chaque donnée de fonctionnalités recherchées selon une plage temporelle prédéterminée et une durée d'utilisation prédéterminée.

Par ailleurs, le dispositif de partage 1 peut avoir une connexion filaire ou sans fil avec Internet 10 et éventuellement un ou plusieurs loTs. L'étape 300 de mémorisation par le dispositif de partage 1 peut ainsi permettre d'obtenir des données de fonctionnalités proposées par des loT et des données de fonctionnalités proposées à partir d'Internet. L'ensemble de ces données de fonctionnalités et de plage temporelle, durée d'utilisation sont avantageusement mémorisées par le dispositif de partage. L'étape de mémorisation permet au dispositif de partage d'augmenter et d'améliorer l'accessibilité aux différentes données de fonctionnalités des loTs présents sur les différents sous réseaux.

L'étape 300 de mémorisation peut également comprendre la mémorisation des fonctions, fonctionnalités, capteurs, capacités de chaque loT grâce à leur identifiant ainsi que leur protocole de communication.

L'étape 300 de mémorisation permet ainsi un gain de temps et de ressources. En effet, le dispositif de partage 1 n'est pas obligé d'interroger chaque loT afin de trouver un loT pouvant répondre aux données de fonctionnalités recherchées par l'IoT demandeur loT1.

L'étape 300 de mémorisation permet au dispositif de partage 1 l'accès à une ou plusieurs bases de données, de préférence sous forme de référentiel comprenant des table ou des listes regroupant les données de fonctionnalités recherchées ou les données de fonctionnalités proposées, fonctions, fonctionnalités, capteurs associé à chaque loT grâce à son identifiant.

En outre, de façon avantageuse, le procédé peut comprendre **une étape 310 de mise à jour** des données de fonctionnalités recherchées mémorisées et des données de fonctionnalités proposées mémorisées. L'étape de mise à jour peut également comprendre l'actualisation des plages temporelles prédéterminées et des durées d'utilisation prédéterminées pour chaque donnée de fonctionnalités recherchée. Ceci permet d'assurer une conformité des données mémorisées, d'améliorer l'efficacité du dispositif de partage 1 et de façon avantageuse de corriger une éventuelle anomalie de mémorisation. En outre, de façon préférée, l'étape 310 de mise à jour est mise en oeuvre selon une fréquence ou plusieurs fréquences paramétrables. Par exemple, il peut s'agir d'une mise à jour journalière pour les données de fonctionnalités recherchées mémorisées et des données de fonctionnalités proposées mémorisées. Il peut aussi s'agir d'une mise à jour journalière des données de fonctionnalités recherchées mémorisées et d'une mise à jour hebdomadaire des données de fonctionnalités proposées mémorisées. En effet, une fréquence paramétrable permet d'assurer une mise à jour à la fois des données de fonctionnalités recherchées mémorisées et des données de fonctionnalités proposées mémorisées. Une fréquence de mise à jour paramétrable permet avantageusement de déterminé la cadence des mises à jour. Par exemple, il est possible que la cadence de mise à jour des données de fonctionnalités proposées mémorisées soit moins fréquente que la cadence de mise à jour des données de fonctionnalités recherchées mémorisées.

Lorsque le dispositif de partage 1 a reçu le message de requête MR contenant les données de fonctionnalités recherchées par l'IoT demandeur selon une plage temporelle prédéterminée et une durée d'utilisation prédéterminée et de préférence son protocole de communication, le procédé selon l'invention peut comprendre **une procédure 351 d'attribution de niveau de priorité,** à chaque loT fournisseur, ladite attribution de niveau de priorité comprenant l'exécution par le dispositif de partage d'au moins une fonction de priorisation pour calculer des niveaux de priorité pour chaque loT fournisseur. Ceci permet de définir un niveau de priorité pour chaque loT fournisseur. Cela permet d'optimiser l'utilisation des ressources et plus particulièrement le partage des fonctionnalités et de gérer de façon dynamique le partage des fonctionnalités. Ceci permet une optimisation des coûts des ressources. En outre, l'utilisation d'une fonction de priorisation permet de gérer la priorisation des loTs fournisseurs au niveau du dispositif de partage et donc de pouvoir facilement mettre en place un tel procédé tout en garantissant une comparabilité des niveaux de priorité.

Cette procédure est de préférence réalisée par le dispositif de partage. Ainsi, il n'est pas nécessaire de configurer chaque loT mais seulement le dispositif de partage.

En particulier, la procédure 351 d'attribution de niveaux de priorité peut comprendre l'exécution par le dispositif de partage d'au moins une fonction de priorisation. Ceci permet de calculer des niveaux de priorité pour chaque donnée de fonctionnalité proposée par chaque loT fournisseur. Cette au moins une fonction de priorisation F1, F2 permet de calculer plusieurs niveaux de priorité P1.1,P1.2,P2.1,P2.2,P3.1,P3.2 pour chaque donnée de fonctionnalité proposée par chaque loT fournisseur.

En particulier, la procédure d'attribution 351 peut comporter l'exécution d'une fonction de priorisation pour chaque donnée de fonctionnalité proposée par chaque loT fournisseur. En particulier, l'exécution de l'au moins une fonction de priorisation F1, F2 permet de calculer au moins deux niveaux de priorité pour chaque donnée de fonctionnalité proposée par chaque loT fournisseur, chacun des niveaux de priorité calculé étant associé à une donnée de fonctionnalité proposée d'un loT fournisseur. De façon préférée, elle permet de calculer au moins quatre niveaux de priorité, de façon encore plus préférée au moins six niveaux de priorité. Ces niveaux de priorité peuvent être mémorisés sur la mémoire du dispositif de partage.

De façon préférée, la procédure 351 d'attribution de niveaux de priorité P1.1, P1.2, P2.1, P2.2, P3.1,P3.2 pour chaque donnée de fonctionnalité proposée par chaque loT fournisseur comprend l'exécution par le dispositif de partage d'au moins une fonction de priorisation F1, F2, pour calculer des niveaux de priorité P1.1,P1.2,P2.1,P2.2,P3.1,P3.2 pour chaque donnée de fonctionnalité proposée par chaque loT fournisseur à partir des données de fonctionnalité recherchée par l'IoT demandeur, de la plage temporelle prédéterminée et de la durée d'utilisation des fonctionnalité recherchées par l'IoT demandeur.

En particulier, la fonction de priorisation peut prendre en compte la localisation de l'IoT fournisseur sur les différents sous-réseaux, la localisation de la donnée de fonctionnalité proposée, de la disponibilité (décrit ci-après) de l'IoT fournisseur et/ou de la donnée de fonctionnalité proposée.

Dans un exemple de mise en oeuvre d'un procédé conforme à l'invention, deux fonctions de priorisation F1 et F2 ont été mémorisées par le dispositif de partage en vue de leur utilisation par ledit dispositif de partage pour le calcul de deux niveaux de priorité pour chaque donnée de fonctionnalité proposée par chaque loT fournisseur sur la base des données de fonctionnalité recherchée mémorisée et de la plage temporelle prédéterminée et de la durée d'utilisation prédéterminée. Par exemple, la fonction de priorisation F1 permet le calcul de niveau de priorité selon la plage horaire prédéterminée tandis que la fonction de priorisation F2 permet le calcul de niveau de priorité pour la localisation de l'IoT fournisseur sur le réseau. Alternativement, une seule fonction de priorisation F1, F2 pourrait être utilisée dès lors, par exemple, qu'elle comporte une variable se référant à la plage temporelle et à la localisation. Il est compréhensible ici que la fonction de priorisation peut comprendre différent paramètres.

Ainsi, les niveaux de priorité P1.1, P1.2, P2.1, P2.2, P3.1 et P3.2 qui sont obtenus sont des valeurs véritablement comparables en l'occurrence deux à deux.

En outre, une valeur de durée de validité de la plage temporelle et de la durée d'utilisation peut être prise en compte dans la fonction de priorisation F1, F2 et/ou associée au niveau de priorité P1.1,P1.2,P2.1,P2.2, P3.1 et P3.2 calculé.

Ainsi, avantageusement, un procédé selon l'invention peut comprendre en outre une étape de mise à jour (non représenté sur les figures) des niveaux de priorité P1.1,P1.2,P2.1,P2.2, P3.1 et P3.2.

De façon préférée, la mise à jour peut comporter l'émission par le dispositif de partage d'un message de mise à jour (non représenté sur les figures) à destination de l'IoT demandeur.

En outre, les niveaux de priorité P1.1,P1.2,P2.1,P2.2, P3.1 et P3.2 pour chaque donnée de fonctionnalité proposée par chaque loT fournisseur peuvent être transmis par le dispositif de partage à d'autres objets connectés tel que l'IoT demandeur. Cela peut permettre de partager entre objets connectés une même répartition de donnée de fonctionnalité proposée par chaque loT fournisseur selon une plage temporelle et/ou une durée d'utilisation différente.

Dans des modes de mises en oeuvre alternatifs, un procédé conforme à l'invention peut comprendre une mise à jour automatique du niveau de priorité P1.1,P1.2,P2.1,P2.2 P3.1 et P3.2. Par exemple, la mise à jour automatique du niveau de priorité P1.1,P1.2,P2.1,P2.2,P3.1 et P3.2 est réalisée de manière périodique, à une fréquence qui est programmable au niveau du dispositif de partage.

L'homme du métier appréciera qu'un procédé selon l'invention et en particulier une procédure 351 d'attribution de niveaux de priorité, puisse être appliquée à tout ou partie des loT de l'infrastructure d'objets connectés connecté au dispositif de partage.

Ensuite, un procédé selon l'invention peut comporter une **étape 400 de recherche,** par le dispositif de partage 1 parmi les données de fonctionnalité préalablement mémorisées, d'une correspondance entre les données de fonctionnalité recherchées et les données de fonctionnalité proposées de façon à identifier un loT fournisseur loT2 proposant la fonctionnalité recherchée par l'IoT demandeur loT1 de préférence, dans la plage temporelle et optionnellement de la durée d'utilisation prédéterminée.

De préférence, l'étape de recherche comprend **une étape 352 de classement** pour chaque donnée de fonctionnalité proposée par chaque loT fournisseur par ordre de leurs niveaux de priorité respectifs, de préférence en fonction de la plage temporelle et de la durée d'utilisation de la fonctionnalité recherchée par l'IoT demandeur. Cette procédure est de préférence réalisée par le dispositif de partage. Cette étape 352 de classement permet d'identifier une loT fournisseur proposant la fonctionnalité recherchée par l'IoT demandeur dans la plage horaire prédéterminée et selon la durée d'utilisation. En particulier, elle permet de faciliter la sélection d'un loT fournisseur. En outre, elle permet une meilleure organisation du partage des fonctionnalités entre loT. Un loT demandeur se connectera à l'IoT fournisseur pour le partage de la fonctionnalité recherchée uniquement selon la plage temporelle prédéterminée et la durée d'utilisation prédéterminée.

L'étape de classement comporte par exemple un premier classement des loT fournisseurs selon la plage temporelle et le niveau de priorité F1 puis un second classement des loT fournisseurs en fonction de la localisation et du niveau de priorité F2.

Alternativement, l'étape de recherche comprend sans s'y limiter la recherche d'une correspondance en établissant une corrélation par lecture des tables ou listes mémorisées lors de l'étape de mémorisation entre les données de fonctionnalité recherchées et les données de fonctionnalité proposées mémorisées. Lorsqu'une corrélation est établie, l'étape de recherche comprend le classement des loT fournisseurs corrélés selon les niveaux de priorité et la plage horaire et durée d'utilisation prédéterminée.

Avantageusement, le procédé selon l'invention comprend **une étape 450 d'ordonnancement.** L'étape 450 d'ordonnancement est de préférence mise en oeuvre par le dispositif de partage 1. Pour cela, l'étape d'ordonnancement comprend la planification et l'organisation des données de fonctionnalité recherchées de l'IoT demandeur et de données de fonctionnalités recherchées préalablement mémorisées. De préférence l'ordonnancement est réalisé n en fonction de la plage temporelle prédéterminée de préférence mémorisée et de la durée d'utilisation prédéterminée de préférence mémorisée. Le dispositif de partage prend en compte la date, l'heure, la plage horaire, la durée d'utilisation et le protocole de communication pour le calcul de l'ordonnancement de chaque donnée de fonctionnalité proposée par chaque loT fournisseur. Ceci permet au dispositif de partage de sélectionner un loT demandeur et/ou un loT fournisseur proposant la meilleure planification pour le partage de fonctionnalité en fonction des fonctionnalités disponibles sur une plage temporelle prédéterminée pour chaque loT fournisseur. En outre, l'ordonnancement permet de répartir dans le temps l'utilisation d'une fonctionnalité en fonction des besoins d'une pluralité d'loTs pour une même fonctionnalité ou d'une fonctionnalité différente.

De façon optionnelle, le procédé peut comprendre une étape 402 d'interrogation, par le dispositif de partage, de l'IoT fournisseur loT2, afin de déterminer si l'IoT fournisseur loT2 est actif ou inactif autrement dit occupé et non disponible ou libre et disponible.

Dans le cas d'un accès occupé ou d'un état inactif, le procédé 100 selon l'invention peut comprendre l'émission d'un message, par le dispositif de partage 1, à destination de l'IoT demandeur loT1 comprenant l'identifiant de l'IoT fournisseur loT2 précédemment identifié, afin que l'IoT demandeur loT1 contacte postérieurement l'IoT fournisseur loT2 directement. Ceci est particulièrement avantageux lorsqu'un disfonctionnement sur le réseau apparait par exemple, la suppression d'une passerelle. Ceci permet avantageusement de ne pas engorger le dispositif de partage 1 et d'éviter la répétition de réception de message de requête MR émis par un même loT demandeur loT1 pour des données de ressources recherchées RR identiques et de relancer la procédure d'attribution de niveau de priorité.

Alternativement, dans le cas d'une détermination d'accès occupé ou d'un état inactif d'un premier loT fournisseur loT2 identifié, l'étape 400 de recherche par le dispositif de partage 1 comprend la recherche 403 dans les bases de données, de préférences dans les tables ou listes établies lors de l'étape 300 de mémorisation, s'il y a d'autres loT présentant une correspondance entre les données de fonctionnalité recherchée et les données de fonctionnalité proposées. Si une correspondance est établie le procédé 100 comprend une étape d'information de l'IoT demandeur loT1 en lui indiquant l'IoT qu'il peut contacter ainsi que le protocole de communication à utiliser pour pouvoir disposer de la ressource / fonctionnalité / capteur. Il peut par exemple s'agir d'une adresse IP, d'un port, d'une requête. De préférence, il s'agit de l'IoT fournisseur présentant le niveau de priorité le plus élevé lorsque le premier loT fournisseur n'est plus disponible.

Par ailleurs, afin d'optimiser l'étape 400 de recherche, le procédé 100 selon l'invention peut comprendre **une étape 500 de centralisation,** par le dispositif de partage 1, de l'ensemble des données de fonctionnalité proposées RP des différents loTs présents sur un ou plusieurs sous-réseaux. Avantageusement, l'étape 500 de centralisation peut également comprendre la centralisation de l'ensemble des données de fonctionnalité recherchées RR par les différents loT demandeur présents sur un ou plusieurs sous-réseaux.

Ainsi, pour chaque nouvelle ressource / fonctionnalité / capteur proposée, l'étape de 400 recherche peut comprendre la recherche dans les bases de données précédemment établies si un message de requêtes MR comprenant les mêmes données de fonctionnalité recherchées a été émis antérieurement. Ceci permet d'optimiser l'étape 400 de recherche et d'améliorer l'efficacité du procédé en améliorant le partage des fonctionnalités.

Si une correspondance est établie le procédé peut comprendre une étape 404 d'envoi par le dispositif de partage, des identifiants ID de l'IoT fournisseur loT2 ayant précédemment partagé lesdites données de fonctionnalité recherchées RR ou présentant lesdites données de fonctionnalité recherchées. Avantageusement, l'étape 404 d'envoi comprend également l'envoi du protocole de communication PC de l'IoT fournisseur loT2 à l'IoT demandeur loT1. L'étape 404 d'envoi peut également comprendre l'envoi de l'identifiant, l'adresse IP, le port et le format.

Avantageusement, l'étape 404 d'envoi comprend également l'envoi des protocoles de communication de chaque l'IoT fournisseur à l'IoT demandeur. De préférence, l'étape d'envoi comprend l'envoi d'un seul message comprenant les identifiants, données de fonctionnalité et protocole de communication à l'IoT demandeur. Ceci est notamment possible grâce à l'étape de centralisation.

Par ailleurs, lorsque il est identifié un loTs fournisseur loT2 sur un sous réseau, de préférence présentant un niveau de priorité élevé et l'utilisation des fonctionnalités planifié par l'ordonnancement, le procédé 100 selon l'invention peut comprendre **une étape 600 de détermination,** par le dispositif de partage 1, d'un intervalle temporel durant lequel l'IoT fournisseur loT2 pourra fournir la fonctionnalité recherchée.

En outre, lorsque l'intervalle temporel est déterminé, le procédé peut comprendre **une étape de mise à disposition 700** des fonctionnalités du ou des loTs fournisseur loT2.

De façon avantageuse, l'étape de mise à disposition des fonctionnalités du ou des loTs fournisseur loT2 peut être réalisée de façon continue, ponctuelle ou selon une fréquence d'utilisation *f.*

Ainsi, lorsqu'un loTs souhaite utiliser une fonctionnalité partagée, il utilise les informations que le dispositif de partage lui a transmises pour communiquer avec l'IoT fournisseur proposant cette fonctionnalité en utilisant la méthode indiquée.

Le procédé peut également comprendre **une étape 800 d'envoi d'un message de requête de partage MRP** de fonctionnalité recherchée entre l'IoT demandeur loT1 et l'IoT fournisseur loT2 à un instant correspondant à l'intervalle temporel déterminé et selon le protocole de communication PC de l'IoT fournisseur.

Le message de requête MR est de préférence émis par l'IoT demandeur loT1 à destination du dispositif de partage 1. Le message de requête MR comprend des données de fonctionnalités recherchées par l'IoT demandeur loT1. Ainsi, l'IoT demandeur loT1 indique au dispositif de partage 1 la (les) ressource(s), fonctionnalité(s), capacité(s) et/ou capteur(s) qu'il recherche pour exécuter sa ou ses fonctions, fonctionnalités, capacités, de préférence via la passerelle à laquelle il s'est connecté.

Avantageusement ; le message de requête de partage émis par le dispositif de partage peut contenir :
- un type de message (par exemple les données de fonctionnalité proposée dans cet exemple) ;
- son identifiant unique (par exemple son adresse IP)
- l'identifiant unique de l'IoT fournisseur
- un code d'application identifiant l'application émettrice du message de requête envoyé, et un numéro unique du message incrémenté (en cas de retransmission du même message ou requête MR1) ;
- des données applicatives ;
- une somme de contrôle (« Checksum » en anglais) permettant de valider l'intégrité du message transmis,
- La date d'expiration,
- La passerelle à utiliser pour la réponse, et/ou
- L'heure de la transmission de la réponse.

En outre, le message de requête de partage MRP peut comprendre le protocole de communication de l'IoT fournisseur loT2. De préférence, le message de requête de partage comprend le protocole de communication pour accéder à la fonctionnalité proposée.

Par exemple, le message de requête de partage MRP peut comprendre un protocole de connexion, un protocole de communication, une API afin d'indiquer comment il est possible d'interagir avec sa propre APl, un format, des données d'adressage, de routage, de port, protocole de transport etc...

Par exemple, le protocole de communication peut comprendre une matrice de communication de façon à normaliser l'échange ou les échanges entre loTs pour le partage de fonctionnalité. Une matrice peut par exemple correspondre à un tableau pour le formatage, permettant d'échanger en une seule fois les fonctionnalités.

Suite à la réception du message de requête de partage MRP de fonctionnalité recherchée par l'IoT fournisseur loT2, l'IoT fournisseur transmet un accès aux fonctionnalités recherchées par l'IoT demandeur à l'IoT demandeur au moment correspondant à l'intervalle temporel. Le message peut utiliser le même mécanisme de transport que le message de requête émis par l'IoT demandeur. Ce partage de fonctionnalités peut être réalisé de façon continue entre l'IoT demandeur et l'IoT fournisseur, lorsque l'IoT demandeur nécessite les fonctionnalités recherchées de façon ininterrompue pour améliorer ses capacités et son fonctionnement.

Ce partage de fonctionnalités peut être réalisé de façon ponctuelle, lorsque l'IoT demandeur nécessite les fonctionnalités recherchées qu'occasionnellement pour améliorer son fonctionnement et ses capacités.

Ce partage de fonctionnalités peut également être réalisé selon une fréquence d'utilisation, lorsque les fonctionnalités recherchées sont utilisées périodiquement ou de façon programmées par l'IoT demandeur pour améliorer ses capacités et son fonctionnement.

De façon avantageuse, à la réception des fonctionnalités recherchées par l'IoT demandeur, celui-ci peut envoyer un message d'acquittement au dispositif de partage.

### EXEMPLE DE REALISATION:

Un réfrigérateur pour optimiser ses capacités et son fonctionnement peut utiliser un ou plusieurs capteurs de température d'une station météo du même réseau pour optimiser sa régulation du froid.

Ledit réfrigérateur peut fonctionner sans, mais sera plus performant s'il peut disposer du partage des données de cette sonde de température.

Un autre exemple peut consister en un réfrigérateur ayant la capacité de déterminer la liste des courses et qui utilise alors pour cela la mise à disposition des fonctions de l'imprimante du sous réseau pour imprimer cette liste. Il peut également s'agir de la mise à disposition d'une fonction message (mail ou sms) pour envoyer ladite liste à un utilisateur.

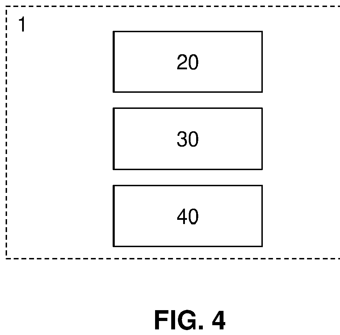

**Selon un autre l'aspect** l'invention se rapporte à **un dispositif 1 de partage** ordonnancé pour le partage des fonctionnalités des loTs dans une infrastructure d'objets connectés comportant une pluralité de passerelles de connexion à des sous réseaux de transport de données pouvant présenter des normes de communication différentes tel qu'illustré à la **figure 4****.** L'infrastructure d'objets connectés comprend au moins un loT demandeur loT1 et au moins un loT fournisseur loT2, chacun étant apte à accéder à au moins une passerelle de la pluralité des passerelles de connexion.

Le dispositif de partage peut comporter **une mémoire de donnée** 20 apte à, de préférence configurée pour mémoriser des données de fonctionnalités proposées d'objets connectés de l'infrastructure d'objets connectés.

Alternativement, le dispositif de partage peut comporter plusieurs mémoires de donnée aptes à, de préférence configurées pour mémoriser des données de fonctionnalités proposées d'objets connectés de l'infrastructure d'objets connectés.

Avantageusement, la mémoire de donnée est apte à, de préférence configurée pour mémoriser des données de fonctionnalités des loTs demandeurs et des loTs fournisseur. En outre, la mémoire est avantageusement configurée pour mémorisée des niveaux de priorité des loT fournisseurs en fonction de la plage horaire et de la durée d'utilisation prédéterminée.

Le dispositif de partage est avantageusement configuré pour observer, surveiller contrôler ou autrement gérer les divers loT qui peuvent communiquer avec lui. Ainsi la mémoire de donnée du dispositif de partage peut être configuré pour mémoriser des attributs, des activités, des états associés à chaque loT et mémoriser chacune des fonctionnalités de chaque loT.

La mémoire de donnée est également apte à, de préférence configurée pour mémoriser et associer à chaque donnée de fonctionnalités un identifiant loT ainsi que le protocole de communication dudit loT.

En outre, une mémoire de donnée est apte à, de préférence configurée pour, enregistrer, stocker les données de fonctionnalités, ressources, fonctions et capteurs de chaque loT ayant communiqué avec le dispositif de partage.

Par exemple, une mémoire de données peut comprendre un référentiel de données de fonctionnalités sous forme de liste ou de table. Chaque liste ou table associe un identifiant loT, un protocole de communication, les données de fonctionnalités recherchées dans le cas d'un loT demandeur et les données de fonctionnalités mise à disposition dans le cas d'un loT fournisseur.

Une mémoire de données peut avantageusement comporter une section non effaçable, physiquement isolée ou simplement agencée pour qu'un accès en écriture ou en effacement soit proscrit.

Une mémoire de données peut en outre être agencée pour enregistrer les données mesurées par des sondes lorsque le dispositif de partage interroge un loT.

Pour cela, la mémoire de donnée peut être locale, distante et/ou partagée. Il peut s'agir de n'importe quel support lisible connu dans l'art, par exemple une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques, d'une mémoire programmable, effaçable, flash ou toutes autres mémoires permettant le stockage selon une durée prédéterminée ou non. En outre, il peut également s'agir de tout support de stockage de type disque dur, CD-ROM, disque amovible ou tout autre support de stockage connu.

De façon avantageuse, la mémoire peut être mise à jour afin d'améliorer et perfectionner les données de fonctionnalités mémorisées selon une ou plusieurs fréquences paramétrables.

Le dispositif de partage peut être configuré pour communiquer avec l'IoT demandeur. De préférence le dispositif de partage est configuré pour recevoir un message de requête, ledit message de requête comprenant des données de fonctionnalités recherchée par l'IoT demandeur.

Le dispositif de partage peut être configuré pour rechercher, parmi les données de fonctionnalités proposées mémorisées sur sa mémoire, une correspondance entre les données de fonctionnalités recherchées et les données de fonctionnalités proposées de façon à identifier un loT fournisseur proposant la fonctionnalité recherchée par l'IoT demandeur.

Pour cela, le dispositif de partage peut comprendre ou être couplé à **un ou plusieurs processeurs 30.** Un processeur peut être configuré pour manipuler des tables, des listes, des gestionnaires, des contrôleurs, des calculateurs et des ordonnanceurs. De préférence, le ou les processeurs sont aptes à, de préférence configurés pour, déterminer une correspondance entre les données de fonctionnalités recherchée et les données de fonctionnalités proposées, calculer des niveaux de priorité.

Pour cela le processeur est apte à, de préférence configuré pour priorisé chaque données de fonctionnalités proposées et/ ou recherchées en fonction des données de fonctionnalités recherchée selon la plage temporelle prédéterminée et la durée d'utilisation prédéterminée. Ainsi, lorsque le processeur établi une identification entre une donnée de fonctionnalités recherchée et une donnée de fonctionnalités proposée, il peut calculer un niveau de priorité tel que décrit précédemment ou ordonnancer les données de fonctionnalités recherchées tel que décrit précédemment. Avantageusement, un loT fournisseur présentant un protocole de communication identique à l'IoT demandeur peut également bénéficié d'un niveau de priorité plus élevé. Ainsi, le ou les processeurs sont aptes à de préférence configurés pour déterminer un loT fournisseur présentant un niveau de priorité supérieur par rapport à l'ensemble des loT fournisseur présent sur l'infrastructure d'objets connectés et priorisé selon au moins une fonction de priorisation le ou les processeurs.

Alternativement, lorsqu'aucun loT fournisseur ne présente pas l'ensemble des données de fonctionnalités recherchée par l'IoT demandeur ou seulement une partie des données de fonctionnalités recherchées par l'IoT demandeur, le ou les processeurs sont aptes à de préférence configuré pour déterminer plusieurs loTs fournisseurs présentant un niveau de priorité supérieur pour chaque donnée ou partie de données de fonctionnalités recherchée par l'IoT demandeur selon la plage horaire et la durée d'utilisation prédéterminée.

Selon un mode de réalisation, le ou les processeurs peuvent être aptes à, de préférence configurés pour, réguler ou planifier les connexions tant en liaison montante qu'en liaison descendante ; c'est à dire tant en émission qu'en réception.

Avantageusement, le ou les processeurs peuvent être aptes à, de préférence configurés pour, effectuer des déterminations, établir des connexions, effectuer des sélections entre différentes options d'informations, effectuer des évaluations liées aux données, interagir avec des capteurs ou loT couplés au dispositif de partage pour effectuer des opérations de mesure, convertir des informations d'un format à un autre (par exemple, entre différents protocoles tels que .wmv en .avi, etc.), et ainsi de suite.

Selon un mode de réalisation, le dispositif de partage peut comprendre ou être couplé à un ou plusieurs **moyens de communication ou modules de communication 40.** Un moyen de communication peut en particulier être configuré pour recevoir des messages de requête et envoyer des messages de réponse. Par exemple, il peut s'agir d'adresse IP d'émission ou de destination, de port, de passerelle de connexion, utilisant des protocoles de communications adaptés filaire ou non filaire, par exemple TCP (Transport Control Protocol en terminologie anglo-saxonne),TCP/IP, RTP (Real Time Transport Protocol en terminologie anglo-saxonne), UDP (User Data Protocol en terminologie anglo-saxonne), SCTP (Stream Control Transmission Protocol en terminologie anglo-saxonne) afin de transmettre un message de réponse ou de réceptionner un message de requête. De préférence, les transmissions sont réalisées par l'intermédiaire de passerelles de connexion.

Ainsi le dispositif de partage est apte à de préférence configuré pour transmettre, de préférence par l'intermédiaire d'au moins une passerelle de la pluralité de passerelles, et de manière encore plus préférée par l'intermédiaire d'au moins une passerelle identifiée, à l'IoT demandeur un protocole de communication avec l'IoT fournisseur pour l'accès à la fonctionnalité recherchée par l'IoT demandeur.

En outre et de façon particulièrement avantageuse, le dispositif de partage peut être embarqué sur un loT, sur une passerelle, ou sur un hôte dédié. Ainsi le dispositif de partage peut être un dispositif autonome, un dispositif physique ou embarqué.

Le dispositif de partage permet de réduire les coûts de fabrication ainsi que la consommation de ressources et particulièrement de ressources rares. Le dispositif de partage permet aux loTs d'offrir des fonctionnalités plus importantes et d'optimiser leur fonctionnement.

Selon **un autre mode de réalisation,** l'invention concerne **un système 3 de partage** ordonnancé pour le partage des fonctionnalités des loTs dans une infrastructure d'objets connectés comportant une pluralité de passerelles de connexion à des sous réseaux de transport de données pouvant présenter des normes de communication différentes.

L'infrastructure d'objets connectés comprend au moins un loT demandeur et au moins un loT fournisseur, chacun étant apte à accéder à au moins une passerelle de la pluralité des passerelles de connexion.

Le système de partage peut avantageusement comprendre un dispositif de partage. Alternativement, le système de partage peut comprendre plusieurs dispositifs de partage.

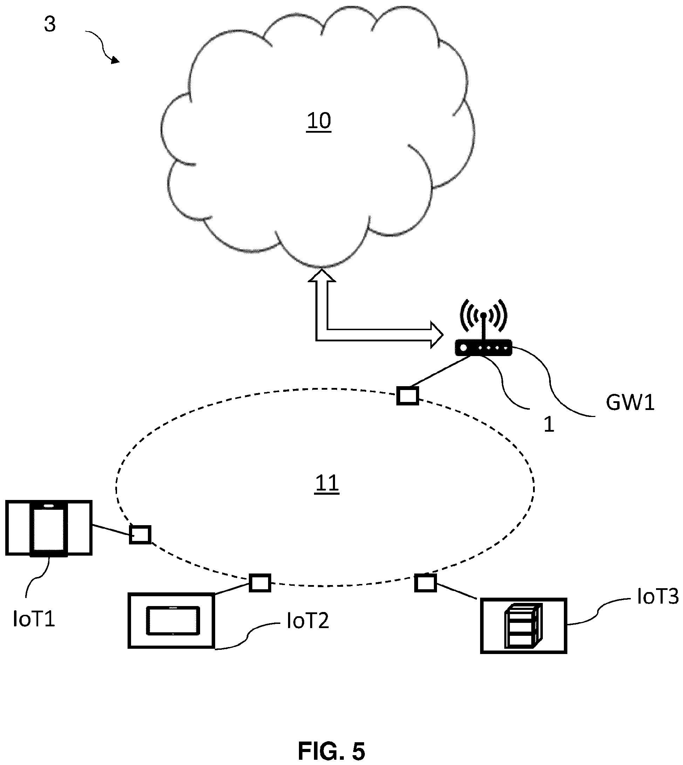

Ainsi, selon un mode de réalisation, un seul dispositif de partage peut être présent pour plusieurs loTs, le dispositif de partage pouvant être agencé au niveau d'une passerelle de connexion tel qu'illustré à **la** **figure 5****.**

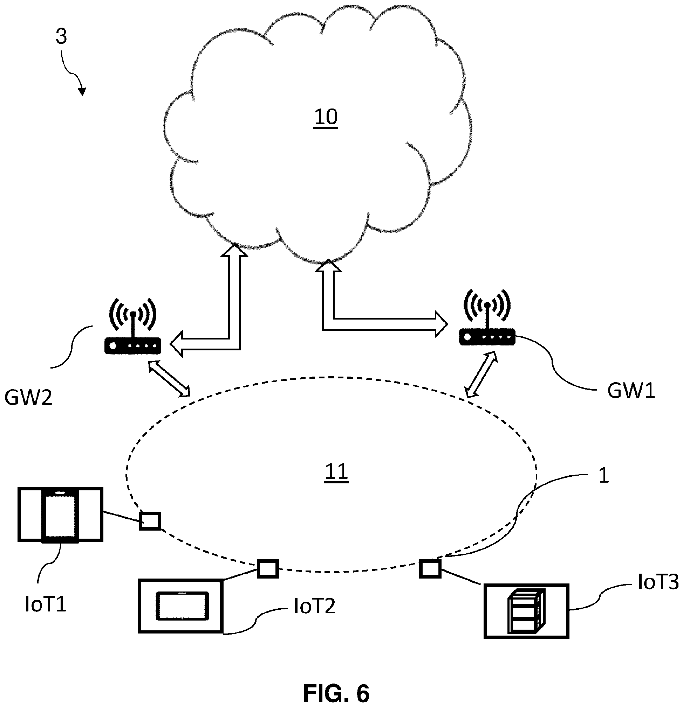

Selon un autre mode de réalisation, illustré à la **figure 6****,** plusieurs dispositifs de partage peuvent être présents pour plusieurs loTs, chaque dispositif de partage pouvant être agencé sur chaque loT. De préférence au niveau des couches de transports. Dans ce mode de réalisation, le dispositif de partage est configuré pour élire la passerelle de connexion compatible et disponible parmi plusieurs passerelles de connexion.

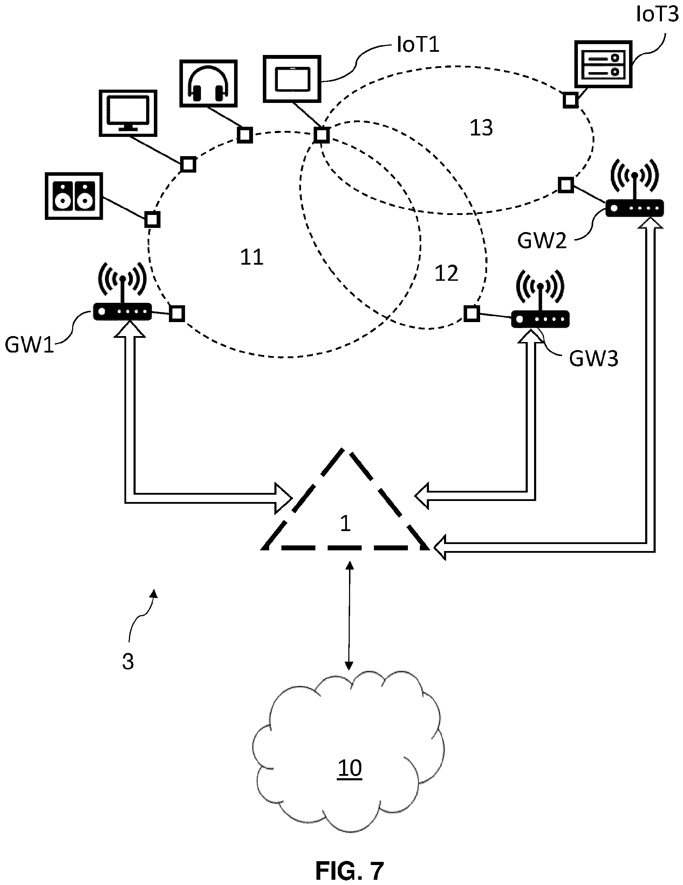

Selon un autre mode de réalisation, illustré à la **figure 7****,** le dispositif de partage peut être configuré pour être agencé entre Internet et les sous-réseaux locaux. De préférence, le dispositif de partage ne fait pas parti du réseau central (i.e. Internet) pour des raisons de sécurité et de confidentialité. Les passerelles de connexions convergent alors vers dispositif de partage qui communique par la suite avec Internet.

Dans ce mode de réalisation, un hôte peut être prévu pour héberger le dispositif de partage..

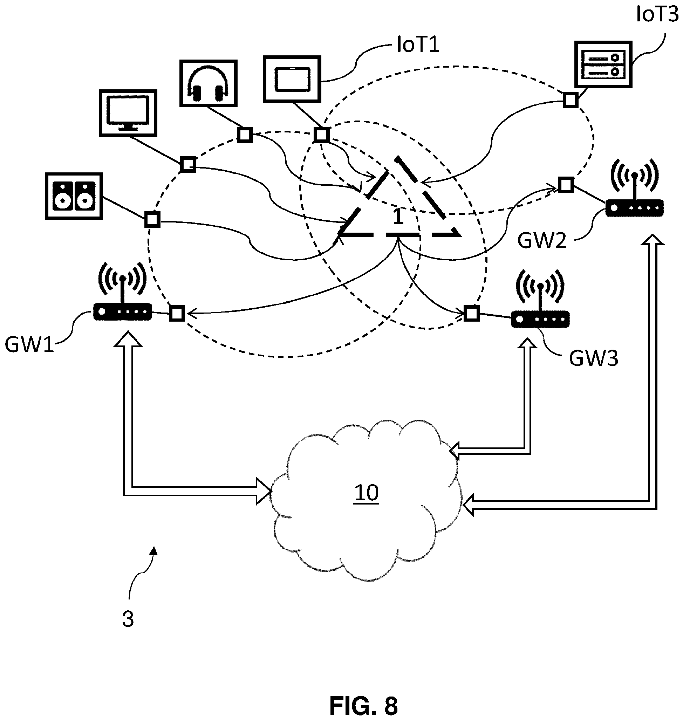

**La** **figure 8** illustre un autre de mode de réalisation, dans lequel, les loTs de chaque sous-réseau convergent vers le dispositif de partage, qui centralise les données de fonctionnalités de chaque loT entre l'infrastructure d'objets connectés et Internet.

Les modes de réalisation illustrés aux figures 5 à 8 ne sont pas limitatifs et d'autres modes de réalisation et plus précisément d'agencement peuvent être réalisés. L'invention ne se limite pas à l'agencement du dispositif de partage.

**Selon un autre aspect,** l'invention concerne **un objet connecté** comprenant un dispositif de partage ordonnancé selon l'invention. Selon un mode de réalisation, l'objet connecté peut comprendre un ou plusieurs autres modules (i.e. : une ou plusieurs mémoires de données, un ou plusieurs processeurs). Selon un agencement particulier, le ou les plusieurs autres modules peuvent être compris par le dispositif de partage.

**Selon un autre aspect,** l'invention concerne **une passerelle de connexion** comprenant un dispositif de partage ordonnancé selon l'invention.

La passerelle de connexion peut être une passerelle de connexion d'un sous-réseau à un réseau central, une passerelle de connexion entre loT d'un même sous-réseau ou de plusieurs sous-réseaux.

En outre, une passerelle de connexion est avantageusement accessible par un objet connecté selon l'invention, i.e. loT fournisseur ou loT demandeur. Les passerelles peuvent transmettre un message envoyé par un loT demandeur ou un loT fournisseur ou encore par le dispositif de partage. Les passerelles de connexion peuvent également transmettre un message à d'autres passerelles de connexion.

En particulier, les passerelles sont configurées pour envoyer un message en réponse au message d'interrogation BCM de l'IoT demandeur, un message de requête émis de préférence par l'IoT demandeur et un message de requête de partage et les données de fonctionnalités partagées et fonctionnalités partagée. Ces messages et données comportent notamment les identifiants de chaque loT.

**Selon un autre aspect,** l'invention porte sur **produit programme d'ordinateur** pour le partage ordonnancé des fonctionnalités des loTs dans une infrastructure d'objets connectés comportant une pluralité de passerelles de connexion à des sous réseaux de transport de données pouvant présenter des normes de communication différentes.

L'infrastructure d'objets connectés comprend au moins un loT demandeur et au moins un loT fournisseur, chacun étant apte à accéder à au moins une passerelle de la pluralité des passerelles de connexion.

Ce programme comprend des instructions qui, lorsque le programme est exécuté par un ordinateur, conduisent celui-ci à mettre en oeuvre les étapes du procédé selon l'invention. Un tel programme peut être enregistré, stocké sur tout support pouvant par la suite être mis en oeuvre par un ordinateur. De préférence, un ordinateur peut également correspondre à tout moyen de lecture de programme tel que tablette, téléphone ou télévision.

## Revendications

1. Procédé (100) de partage ordonnancé des fonctionnalités des Internet des Objets, loTs, dans une infrastructure d'objets connectés comportant une pluralité de passerelles (GW1,GW2,GW3,GW4) de connexion à des sous réseaux (11,12,13,14) de transport de données pouvant présenter des normes de communication différentes, ladite infrastructure d'objets connectés comprenant au moins un dispositif de partage (1) au moins un loT demandeur (loT1) et au moins un loT fournisseur (loT2), chacun étant aptes à accéder à au moins une passerelle de la pluralité des passerelles de connexion, ledit procédé de partage des fonctionnalités des loTs comprenant :
- une étape (200) de communication entre l'IoT demandeur (loT1) et le dispositif de partage (1) comprenant
▪ une réception (201) par le dispositif de partage (1) d'un message de requête (MR), ledit message de requête (MR) comprenant des données de fonctionnalités recherchée par l'IoT demandeur (loT1) selon une plage temporelle prédéterminée,
▪ une réception (202) par le dispositif de partage (1) de données de fonctionnalités proposées de l'IoT demandeur (loT1) ayant émis le message de requête (MR) et d'une plage temporelle prédéterminée associée,
- une étape (400) de recherche, par le dispositif de partage (1) et parmi les données de fonctionnalités proposées (RP) préalablement mémorisées, d'une correspondance entre les données de fonctionnalités recherchées (RR) et les données de fonctionnalités proposées (RP) préalablement mémorisées de façon à identifier un loT fournisseur (loT2) proposant la fonctionnalité recherchée (RR) par l'IoT demandeur (loT1) dans la plage temporelle prédéterminée,
- une étape (450) d'ordonnancement, par le dispositif de partage, des données de fonctionnalités recherchées de l'IoT demandeur (loT1) et de données de fonctionnalités recherchées préalablement mémorisées, ledit ordonnancement étant réalisé notamment en fonction de la plage temporelle prédéterminée,
- une étape (600) de détermination, par le dispositif de partage, d'un intervalle temporel durant lequel l'IoT fournisseur (loT2) pourra fournir la fonctionnalité recherchée, et
- une étape (800) d'envoi à l'IoT fournisseur (loT2), à un instant correspondant à l'intervalle temporel déterminé, d'un message de requête (MRP) de partage de fonctionnalités recherchée entre l'IoT demandeur (loT1) et l'IoT fournisseur (loT2) selon un protocole de communication (PC) de l'IoT fournisseur (loT2) ;
**caractérisé en ce que** l'étape de communication comprend la réception par le dispositif de partage d'une durée d'utilisation et l'étape de recherche comprend l'identification de l'IoT fournisseur (loT2) selon la durée d'utilisation.

2. Procédé (100) de partage selon la revendication 1, **caractérisé en ce que** le message de requête de partage comprend un protocole de communication (PC) de l'IoT fournisseur (loT2) afin que l'IoT demandeur (loT1) accède à la fonctionnalité de l'IoT fournisseur (loT2).

3. Procédé (100) de partage selon l'une des revendications précédentes, **caractérisé en ce qu'**il comprend une étape (500) de centralisation, par le dispositif de partage (1), de l'ensemble des données de fonctionnalités proposées (RP) et des données de fonctionnalités recherchées des différents loTs présents sur un ou plusieurs sous-réseaux (11,12,13,14).

4. Procédé (100) de partage selon l'une des revendications précédentes, **caractérisé en ce qu'**il comprend une étape (300) de mémorisation des données de fonctionnalités recherchées (RR) et des données de fonctionnalités proposées (RP), par le dispositif de partage (1), ladite mémorisation pouvant être locale, distante, ou partagée.

5. Procédé (100) de partage selon la revendication 4, caractérisé en ce l'étape (300) de mémorisation comprend l'enregistrement et le stockage des périodes temporelles prédéterminées et des durées d'utilisation prédéterminées des loTs demandeurs.

6. Procédé (100) de partage selon l'une des revendications précédentes, **caractérisé en ce qu'**il comprend une étape (310) de mise à jour des données de fonctionnalités recherchées (RR) mémorisées et des données de fonctionnalités proposées (RP) mémorisées, selon une ou plusieurs fréquences paramétrables.

7. Procédé (100) de partage selon l'une des revendications précédentes, **caractérisé en ce qu'**il comprend une procédure d'attribution de niveau de priorité pour chaque donnée de fonctionnalités proposée, ladite attribution de niveau de priorité comprenant l'exécution par le dispositif de partage d'au moins une fonction de priorisation pour calculer des niveaux de priorité pour chaque donnée de fonctionnalités proposée.

8. Procédé (100) de partage selon la revendication 7, caractérisé en ce l'exécution d'au moins une fonction de priorisation pour calculer au moins deux niveaux de priorité pour chaque donnée de fonctionnalité proposée par chaque loT fournisseur, chacun des niveaux de priorité calculé étant associé à une donnée de fonctionnalité proposée d'un loT fournisseur.

9. Procédé (100) de partage selon l'une des revendications précédentes, caractérisé en ce l'étape de recherche comprend le classement, par le dispositif de partage, de chaque donnée de fonctionnalité proposée par ordre de leur niveau de priorité respectif en vue de l'identification de l'IoT fournisseur.

10. Procédé (100) de partage selon l'une des revendications précédentes, **caractérisé en ce qu'**il comprend une étape d'analyse (101) par l'IoT demandeur (loT1) du besoin en fonctionnalités de l'IoT demandeur selon une plage temporelle prédéterminée et une durée d'utilisation prédéterminée de ladite fonctionnalité.

11. Procédé (100) de partage selon l'une des revendications précédentes, **caractérisé en ce qu'**il comprend une étape de mise à disposition (700) des fonctionnalités du ou des loTs fournisseur (loT2) de façon continue, ponctuelle ou selon une fréquence d'utilisation (f).

12. Dispositif (1) de partage pour le partage ordonnancé des fonctionnalités des Internet des Objets, loTs, dans une infrastructure d'objets connectés comportant une pluralité de passerelles de connexion (GW1,GW2,GW3,GW4) à des sous réseaux (11,12,13,14) de transport de données pouvant présenter des normes de communication différentes, ladite infrastructure d'objets connectés comprenant au moins un loT demandeur (loT1) et au moins un loT fournisseur (loT2), chacun étant apte à accéder à au moins une passerelle de la pluralité des passerelles de connexion (GW1,GW2,GW3,GW4), ledit dispositif (1) de partage comportant une mémoire (20) de donnée configurée pour mémoriser des données de fonctionnalités proposées (RP) d'objets connectés de l'infrastructure d'objets connectés et étant configuré pour :
- communiquer avec l'IoT demandeur (loT1) et recevoir un message de requête (MR), ledit message de requête (MR) comprenant des données de fonctionnalités recherchées (RR) par l'IoT demandeur (loT1) selon une plage temporelle prédéterminée, et recevoir des données de fonctionnalités proposées de l'IoT demandeur (loT1) et d'une plage temporelle prédéterminée associée,
- rechercher, parmi les données de fonctionnalités proposées (RP) préalablement mémorisées sur sa mémoire (20), une correspondance entre les données de fonctionnalité recherchées (RR) et les données de fonctionnalité proposées (RP) préalablement mémorisées de façon à identifier un loT fournisseur (loT2) proposant la fonctionnalités recherchée (RR) par l'IoT demandeur (loT1) dans la plage temporelle prédéterminée,
- ordonnancer parmi les données de fonctionnalités recherchées de l'IoT demandeur (IoT1) et de données de fonctionnalités recherchées préalablement mémorisées, l'ordonnancement étant réalisé notamment en fonction de la plage temporelle prédéterminée, et
- déterminer, un intervalle temporel durant lequel l'IoT fournisseur (loT2) pourra fournir la fonctionnalité recherchée ;
**caractérisé en ce que** le dispositif de partage est en outre configuré pour :
- recevoir une durée d'utilisation, et
- identifier l'IoT fournisseur (loT2) selon ladite durée d'utilisation.

13. Dispositif (1) de partage selon la revendication 12, **caractérisé en ce que** la mémoire (20) de donnée est configurée pour mémoriser des niveaux de priorité des loT fournisseurs en fonction de la plage horaire et de la durée d'utilisation prédéterminée.

14. Système (3) de partage pour le partage ordonnancé des fonctionnalités des Internet des Objets, loTs, dans une infrastructure d'objets connectés comportant une pluralité de passerelles de connexion (GW1,GW2,GW3,GW4) à des sous réseaux (11,12,13,14) de transport de données pouvant présenter des normes de communication différentes, ladite infrastructure d'objets connectés comprenant au moins un loT demandeur (loT1) et au moins un loT fournisseur (loT2), chacun étant apte à accéder à au moins une passerelle de la pluralité des passerelles de connexion (GW1,GW2,GW3,GW4), ledit système (3) de partage comprenant en outre un dispositif (1) de partage comportant une mémoire (20) de donnée configurée pour mémoriser des données de fonctionnalité proposées (RP) d'objets connectés de l'infrastructure d'objets connectés et étant configuré pour :
- communiquer avec l'IoT demandeur (loT1) et recevoir un message de requête (MR), ledit message de requête (MR) comprenant des données de fonctionnalités recherchées (RR) par l'IoT demandeur (loT1) selon une plage temporelle prédéterminée, et recevoir des données de fonctionnalités proposées de l'IoT demandeur (loT1) et d'une plage temporelle prédéterminée associée,
- rechercher, parmi les données de fonctionnalités proposées (RP) préalablement mémorisées sur sa mémoire (20), une correspondance entre les données de fonctionnalité recherchées (RR) et les données de fonctionnalité proposées (RP) préalablement mémorisées de façon à identifier un loT fournisseur (loT2) proposant la fonctionnalités recherchée (RR) par l'IoT demandeur (loT1) dans la plage temporelle prédéterminée,
- ordonnancer parmi les données de fonctionnalités recherchées de l'IoT demandeur (IoT1) et de données de fonctionnalités recherchées préalablement mémorisées, l'ordonnancement étant réalisé notamment en fonction de la plage temporelle prédéterminée, et
- déterminer, un intervalle temporel durant lequel l'IoT fournisseur (loT2) pourra fournir la fonctionnalité recherchée ;
**caractérisé en ce que** le dispositif de partage est en outre configuré pour :
- recevoir une durée d'utilisation, et
- identifier l'IoT fournisseur (loT2) selon ladite durée d'utilisation.

## Patentansprüche

1. Verfahren (100) zum geplanten Freigeben von Funktionalitäten von Internets of Things, loTs, in einer Infrastruktur verbundener Objekte, die eine Vielzahl von Verbindungs-Gateways (GW1, GW2, GW3, GW4) zu Subnetzen (11, 12, 13, 14) für einen Datentransport vorweist, die unterschiedliche Kommunikationsstandards aufweisen können, wobei die Infrastruktur verbundener Objekte mindestens eine Freigabevorrichtung (1), mindestens ein anforderndes loT (loT1) und mindestens ein bereitstellendes loT (IoT2) umfasst, die jeweils geeignet sind, auf mindestens ein Gateway aus der Vielzahl der Verbindungs-Gateways zuzugreifen, wobei das Verfahren zum Freigeben der Funktionalitäten der loTs umfasst:
- einen Schritt (200) des Kommunizierens zwischen dem anfordernden loT (loT1) und der Freigabevorrichtung (1), umfassend
▪ Empfangen (201) einer Anforderungsnachricht (MR) durch die Freigabevorrichtung (1), wobei die Anforderungsnachricht (MR) Funktionalitätsdaten umfasst, die von dem anfordernden loT (loT1) in einem vorbestimmten Zeitbereich gesucht werden,
▪ Empfangen (202), durch die Freigabevorrichtung (1), von angebotenen Funktionalitätsdaten des anfordernden IoT (loT1), das die Anforderungsnachricht (MR) gesendet hat, und eines zugehörigen vorbestimmten Zeitbereichs,
- einen Schritt (400) des Suchens, durch die Freigabevorrichtung (1) und unter den zuvor gespeicherten angebotenen Funktionalitätsdaten (RP), nach einer Übereinstimmung zwischen den gesuchten Funktionalitätsdaten (RR) und den zuvor gespeicherten angebotenen Funktionalitätsdaten (RP), um ein bereitstellendes loT (IoT2) zu identifizieren, das die von dem anfordernden loT (loT1) gesuchte Funktionalität (RR) innerhalb des vorbestimmten Zeitbereichs anbietet,
- einen Schritt (450) des Planens, durch die Freigabevorrichtung, der gesuchten Funktionalitätsdaten des anfordernden IoT (loT1) und von zuvor gespeicherten gesuchten Funktionalitätsdaten, wobei die Planung insbesondere in Abhängigkeit von dem vorbestimmten Zeitbereich durchgeführt wird,
- einen Schritt (600) des Bestimmens eines Zeitintervalls durch die Freigabevorrichtung, in dem das bereitstellende loT (IoT2) die gesuchte Funktionalität bereitstellen kann, und
- einen Schritt (800) des Sendens einer Anforderungsnachricht (MRP) zum Freigeben der gesuchten Funktionalität zwischen dem anfordernden loT (loT1) und dem bereitstellenden loT (IoT2) gemäß einem Kommunikationsprotokoll (PC) des bereitstellenden IoT (IoT2) zu einem Zeitpunkt, der mit dem bestimmten Zeitintervall übereinstimmt, an das bereitstellende loT (IoT2);
**dadurch gekennzeichnet, dass** der Schritt des Kommunizierens das Empfangen einer Nutzungsdauer durch die Freigabevorrichtung umfasst und der Schritt des Suchens das Identifizieren des bereitstellenden IoT (IoT2) gemäß der Nutzungsdauer umfasst.

2. Freigabeverfahren (100) nach Anspruch 1,
**dadurch gekennzeichnet, dass** die Anforderungsnachricht zum Freigeben ein Kommunikationsprotokoll (PC) des bereitstellenden IoT (IoT2) umfasst, damit das anfordernde loT (loT1) auf die Funktionalität des bereitstellenden IoT (IoT2) zugreift.

3. Freigabeverfahren (100) nach einem der vorstehenden Ansprüche,
**dadurch gekennzeichnet, dass** es einen Schritt (500) des Zentralisierens, durch die Freigabevorrichtung (1), der Gesamtheit der angebotenen Funktionalitätsdaten (RP) und der gesuchten Funktionalitätsdaten der verschiedenen loTs umfasst, die in einem oder mehreren Subnetzen (11, 12, 13, 14) vorhanden sind.

4. Freigabeverfahren (100) nach einem der vorstehenden Ansprüche, **dadurch gekennzeichnet, dass** es einen Schritt (300) des Speicherns der gesuchten Funktionalitätsdaten (RR) und der angebotenen Funktionalitätsdaten (RP) durch die Freigabevorrichtung (1) umfasst, wobei das Speichern lokal, entfernt oder durch Freigeben erfolgen kann.

5. Freigabeverfahren (100) nach Anspruch 4, **dadurch gekennzeichnet, dass** der Schritt (300) des Speicherns das Aufzeichnen und Speichern von vorbestimmten Zeitperioden und vorbestimmten Nutzungsdauern der anfordernden loTs umfasst.

6. Freigabeverfahren (100) nach einem der vorstehenden Ansprüche, **dadurch gekennzeichnet, dass** es einen Schritt (310) des Aktualisierens der gespeicherten gesuchten Funktionalitätsdaten (RR) und der gespeicherten angebotenen Funktionalitätsdaten (RP) gemäß einer oder mehrerer parametrierbarer Frequenzen umfasst.

7. Freigabeverfahren (100) nach einem der vorstehenden Ansprüche, **dadurch gekennzeichnet, dass** es ein Verfahren zum Zuweisen von Prioritätsstufen für jedes angebotene Funktionalitätsdatenelement umfasst, wobei das Zuweisen von Prioritätsstufen das Ausführen mindestens einer Priorisierungsfunktion durch die Freigabevorrichtung umfasst, um Prioritätsstufen für jedes angebotene Funktionalitätsdatenelement zu berechnen.

8. Freigabeverfahren (100) nach Anspruch 7, **gekennzeichnet durch** das Ausführen mindestens einer Priorisierungsfunktion, um mindestens zwei Prioritätsstufen für jedes von jedem bereitstellenden IoT angebotene Funktionalitätsdatenelement zu berechnen, wobei jede der berechneten Prioritätsstufen einem angebotenen Funktionalitätsdatenelement eines bereitstellenden IoT zugeordnet ist.

9. Freigabeverfahren (100) nach einem der vorstehenden Ansprüche, **dadurch gekennzeichnet, dass** der Schritt des Suchens das Ordnen jedes angebotenen Funktionalitätsdatenelements durch die Freigabevorrichtung in der Reihenfolge seiner jeweiligen Prioritätsstufe zur Identifizierung des bereitstellenden IoT umfasst.

10. Freigabeverfahren (100) nach einem der vorstehenden Ansprüche, **dadurch gekennzeichnet, dass** es einen Schritt (101) des Analysierens, durch das anfordernde loT (loT1), des Bedarfs an Funktionalitäten des anfordernden IoT gemäß einem vorbestimmten Zeitbereich und einer vorbestimmten Nutzungsdauer der Funktionalität umfasst.

11. Freigabeverfahren (100) nach einem der vorstehenden Ansprüche, **dadurch gekennzeichnet, dass** es einen Schritt (700) des Bereitstellens der Funktionalitäten des oder der bereitstellenden IoTs (IoT2) auf kontinuierliche Weise, punktuell oder gemäß einer Nutzungsfrequenz (*f*) umfasst.

12. Freigabevorrichtung (1) zum geplanten Freigeben von Funktionalitäten von Internets of Things, lots, in einer Infrastruktur verbundener Objekte, die eine Vielzahl von Verbindungs-Gateways (GW1, GW2, GW3, GW4) zu Subnetzen (11, 12, 13, 14) für den Datentransport vorweist, die unterschiedliche Kommunikationsstandards aufweisen können, wobei die Infrastruktur verbundener Objekte mindestens ein anforderndes loT (loT1) und mindestens ein bereitstellendes loT (IoT2) umfasst, die jeweils geeignet sind, auf mindestens ein Gateway aus der Vielzahl der Verbindungs-Gateways (GW1, GW2, GW3, GW4) zuzugreifen, wobei die Freigabevorrichtung (1) einen Datenspeicher (20) vorweist, der dazu konfiguriert ist, angebotene Funktionalitätsdaten (RP) von verbundenen Objekten der Infrastruktur verbundener Objekte zu speichern und konfiguriert ist zum:
- Kommunizieren mit dem anfordernden loT (loT1) und Empfangen einer Anforderungsnachricht (MR), wobei die Anforderungsnachricht (MR) Funktionalitätsdaten (RR) umfasst, die von dem anfordernden loT (loT1) in einem vorbestimmten Zeitbereich gesucht werden, und Empfangen von Funktionalitätsdaten, die von dem anfordernden IoT (loT1) angeboten werden, und eines zugehörigen vorbestimmten Zeitbereichs,
- Suchen, unter den zuvor in ihrem Speicher (20) gespeicherten angebotenen Funktionalitätsdaten (RP), nach einer Übereinstimmung zwischen den gesuchten Funktionalitätsdaten (RR) und den zuvor gespeicherten angebotenen Funktionalitätsdaten (RP), um ein bereitstellendes loT (IoT2) zu identifizieren, das die von dem anfordernden loT (loT1) gesuchte Funktionalität (RR) innerhalb des vorbestimmten Zeitbereichs anbietet,
- Planen unter den gesuchten Funktionalitätsdaten des anfordernden IoT (loT1) und von zuvor gespeicherten gesuchten Funktionalitätsdaten, wobei die Planung insbesondere in Abhängigkeit von dem vorbestimmten Zeitbereich durchgeführt wird, und
- Bestimmens eines Zeitintervalls, in dem das bereitstellende loT (IoT2) die gesuchte Funktionalität bereitstellen kann;
**dadurch gekennzeichnet, dass** die Freigabevorrichtung ferner konfiguriert ist zum:
- Empfangen einer Nutzungsdauer und
- Identifizieren des bereitstellenden IoT (IoT2) gemäß der Nutzungsdauer.

13. Freigabevorrichtung (1) nach Anspruch 12,
**dadurch gekennzeichnet, dass** der Datenspeicher (20) dazu konfiguriert ist, Prioritätsstufen von den bereitstellenden IoT in Abhängigkeit von dem vorbestimmten Zeitbereich und der vorbestimmten Nutzungsdauer zu speichern.

14. Freigabesystem (3) zum geplanten Freigeben von Funktionalitäten von Internets of Things, loTs, in einer Infrastruktur verbundener Objekte, die eine Vielzahl von Verbindungs-Gateways (GW1, GW2, GW3, GW4) zu Subnetzen (11, 12, 13, 14) für den Datentransport vorweist, die unterschiedliche Kommunikationsstandards aufweisen können, wobei die Infrastruktur verbundener Objekte mindestens ein anforderndes loT (loT1) und mindestens ein bereitstellendes loT (IoT2) umfasst, die jeweils geeignet sind, auf mindestens ein Gateway aus der Vielzahl der Verbindungs-Gateways (GW1, GW2, GW3, GW4) zuzugreifen, wobei das Freigabesystem (3) ferner eine Freigabevorrichtung (1) umfasst, die einen Datenspeicher (20) vorweist, der dazu konfiguriert ist, angebotene Funktionalitätsdaten (RP) von verbundenen Objekten der Infrastruktur verbundener Objekte zu speichern und konfiguriert ist zum:
- Kommunizieren mit dem anfordernden loT (loT1) und Empfangen einer Anforderungsnachricht (MR), wobei die Anforderungsnachricht (MR) Funktionalitätsdaten (RR) umfasst, die von dem anfordernden loT (loT1) in einem vorbestimmten Zeitbereich gesucht werden, und Empfangen von Funktionalitätsdaten, die von dem anfordernden IoT (loT1) angeboten werden, und eines zugehörigen vorbestimmten Zeitbereichs,
- Suchen, unter den zuvor in ihrem Speicher (20) gespeicherten angebotenen Funktionalitätsdaten (RP), nach einer Übereinstimmung zwischen den gesuchten Funktionalitätsdaten (RR) und den zuvor gespeicherten angebotenen Funktionalitätsdaten (RP), um ein bereitstellendes loT (IoT2) zu identifizieren, das die von dem anfordernden loT (loT1) gesuchte Funktionalität (RR) innerhalb des vorbestimmten Zeitbereichs anbietet,
- Planen unter den gesuchten Funktionalitätsdaten des anfordernden IoT (loT1) und von zuvor gespeicherten gesuchten Funktionalitätsdaten, wobei die Planung insbesondere in Abhängigkeit von dem vorbestimmten Zeitbereich durchgeführt wird, und
- Bestimmens eines Zeitintervalls, in dem das bereitstellende loT (IoT2) die gesuchte Funktionalität bereitstellen kann;
**dadurch gekennzeichnet, dass** die Freigabevorrichtung ferner konfiguriert ist zum:
- Empfangen einer Nutzungsdauer und
- Identifizieren des bereitstellenden IoT (IoT2) gemäß der Nutzungsdauer.

## Claims

1. A method (100) for the ordered sharing of functionalities of Internet of Things, loTs, in an infrastructure of connected objects comprising a plurality of gateways (GW1, GW2, GW3, GW4) for connecting to data transport sub-networks (11, 12, 13, 14) that can have different communication standards, said infrastructure of connected objects comprising at least one sharing device (1), at least one requesting IoT (loT1) and at least one providing IoT (IoT2), each being able to access at least one gateway of the plurality of connection gateways, said method for sharing functionalities of loTs comprising:
- a step (200) of communication between the requesting IoT (loT1) and the sharing device (1) comprising
• receiving (201), by the sharing device (1), of a request message (MR), said request message (MR) comprising functionality data sought by the requesting IoT (loT1) according to a predetermined time range,
• receiving (202), by the sharing device (1), of functionality data offered from the requesting IoT (loT1) having transmitted the request message (MR), and an associated predetermined time range,
- a step (400) of searching, by the sharing device (1), among the previously stored offered functionality data (RP), for a match between the functionality data (RR) sought and the previously stored offered functionality data (RP) so as to identify a providing IoT (IoT2) offering the functionality (RR) sought by the requesting IoT (IoT1) within the predetermined time range,
- a step (450) of ordering, by the sharing device, of the functionality data sought by the requesting IoT (IoT1) and of previously stored functionality data sought, said ordering being carried out in particular according to the predetermined time range,
- a step (600) of determining, by the sharing device, of a time interval during which the providing IoT (IoT2) can provide the functionality sought, and
- a step (800) of sending to the providing IoT (IoT2), at a time corresponding to the determined time interval, a request message (MRP) for the sharing of functionalities sought between the requesting IoT (loT1) and the providing IoT (IoT2) according to a communication protocol (PC) of the providing IoT (IoT2);
**characterized in that** the communication step comprises receiving, by the sharing device, of a length of use and the searching step comprises identifying the providing IoT (IoT2) according to the length of use.

2. The sharing method (100) according to claim 1, **characterized in that** the sharing request message comprises a communication protocol (PC) of the providing IoT (IoT2) so that the requesting IoT (loT1) may access the functionality of the providing IoT (IoT2).

3. The sharing method (100) according to one of the preceding claims, **characterized in that** it comprises a step (500) of centralizing, by the sharing device (1), of all the functionality data (RP) offered and all the functionality data sought by the different loTs present on one or more sub-networks (11, 12, 13, 14).

4. The sharing method (100) according to one of the preceding claims, **characterized in that** it comprises a step (300) of storing, by the sharing device (1), of the functionality data (RR) sought and the functionality data (RP) offered, said storage possibly being local, remote, or shared.

5. The sharing method (100) according to claim 4, **characterized in that** the step (300) of storing comprises recording and storing predetermined time periods and predetermined lengths of use of the requesting lots.

6. The sharing method (100) according to one of the preceding claims, **characterized in that** it comprises a step (310) of updating stored functionality data (RR) sought and stored functionality data (RP) offered, according to one or more configurable frequencies.

7. The sharing method (100) according to one of the preceding claims, **characterized in that** it comprises a priority level assignment procedure for each piece of functionality data offered, said priority level assignment comprising the execution by the sharing device of at least one prioritization function for calculating priority levels for each piece of functionality data offered.

8. The sharing method (100) according to claim 7, **characterized in** the execution of at least one prioritization function for calculating at least two priority levels for each piece of functionality data offered by each providing IoT, each of the calculated priority levels being associated with a piece of offered functionality data from a providing IoT.

9. The sharing method (100) according to one of the preceding claims, **characterized in that** the step of searching comprises ranking, by the sharing device, of all functionality data offered by their relevant priority level in order to identify the providing IoT.

10. The sharing method (100) according to one of the preceding claims, **characterized in that** it comprises a step (101) of analyzing, by the requesting IoT (IoT1), of the functionality needs of the requesting IoT according to a predetermined time range and a predetermined length of use of said functionality.

11. The sharing method (100) according to one of the preceding claims, **characterized in that** it comprises a step (700) of making the functionalities of the providing IoT(s) (IoT2) available continuously, at a specific point or according to a frequency of use (*f*).

12. A device (1) for the ordered sharing of functionalities of Internet of Things, loTs, in an infrastructure of connected objects comprising a plurality of gateways (GW1, GW2, GW3, GW4) for connecting to data transport sub-networks (11, 12, 13, 14) that can have different communication standards, said infrastructure of connected objects comprising at least one requesting IoT (loT1) and at least one providing IoT (IoT2), each capable of accessing at least one gateway of the plurality of connection gateways (GW1, GW2, GW3, GW4), said sharing device (1) comprising a data memory (20) configured to store offered functionality data (RP) of connected objects of the infrastructure of connected objects and being configured to:
- communicate with the requesting IoT (IoT1) and receive a request message (MR), said request message (MR) comprising functionality data (RR) sought by the requesting IoT (loT1) according to a predetermined time range, and to receive functionality data offered from the requesting IoT (loT1) and an associated predetermined time range,
- search, among the previously stored offered functionality data (RP) in its memory (20), for a match between the functionality data (RR) sought and the previously stored offered functionality data (RP) so as to identify a providing IoT (IoT2) offering the functionality (RR) sought by the requesting IoT (loT1) within the predetermined time range,
- order the functionality data sought by the requesting IoT (loT1) and previously stored functionality data sought, the ordering being carried out in particular according to the predetermined time range, and
- determine a time interval during which the providing IoT (IoT2) can provide the desired functionality;
**characterized in that** the sharing device is further configured to:
- receive a length of use, and
- identify the providing IoT (IoT2) according to said length of use.

13. The sharing device (1) according to claim 12, **characterized in that** the data memory (20) is configured to store priority levels of the providing IoT according to the time range and the predetermined length of use.

14. A system (3) for the ordered sharing of functionalities of Internet of Things, loTs, in an infrastructure of connected objects comprising a plurality of gateways (GW1, GW2, GW3, GW4) for connecting to data transport sub-networks (11, 12, 13, 14) that can have different communication standards, said infrastructure of connected objects comprising at least one requesting IoT (loT1) and at least one providing IoT (IoT2), each capable of accessing at least one gateway of the plurality of connection gateways (GW1, GW2, GW3, GW4), said sharing system (3) further comprising a sharing device (1) comprising a data memory (20) configured to store offered functionality data (RP) of connected objects of the infrastructure of connected objects and being configured to:
- communicate with the requesting IoT (IoT1) and receive a request message (MR), said request message (MR) comprising functionality data (RR) sought by the requesting IoT (loT1) according to a predetermined time range, and to receive functionality data offered from the requesting IoT (loT1) and an associated predetermined time range,
- search, among the previously stored offered functionality data (RP) in its memory (20), for a match between the functionality data (RR) sought and the previously stored offered functionality data (RP) so as to identify a providing IoT (IoT2) offering the functionality (RR) sought by the requesting IoT (IoT1) within the predetermined time range,
- order the functionality data sought by the requesting IoT (loT1) and previously stored functionality data sought, the ordering being carried out in particular according to the predetermined time range, and
- determine a time interval during which the providing IoT (IoT2) can provide the desired functionality;
**characterized in that** the sharing device is further configured to:
- receive a length of use, and
- identify the providing IoT (IoT2) according to said length of use.
